# EUROPEAN PATENT SPECIFICATION

(11) **EP 4 315 678 B1**
(45) Date of publication and mention of the grant of the patent: **11.11.2026**
(21) Application number: 22719090.7
(22) Date of filing: 31.03.2022
(51) Int. Cl.: H04L 1/08, H04L 5/00

(54) **REPETITION OF COMMON SEARCH SPACE SETS OF A DOWNLINK CONTROL CHANNEL**
WIEDERHOLUNG VON SÄTZEN VON GEMEINSAMEN SUCHRÄUMEN EINES DOWNLINK-STEUERKANALS
RÉPÉTITION D'ENSEMBLES D'ESPACES DE RECHERCHE COMMUNS D'UN CANAL DE COMMANDE EN LIAISON DESCENDANTE

(30) Priority: 01.04.2021 US 202163169650 P; 30.03.2022 US 202217708516
(43) Date of publication of application: 07.02.2024
(73) Proprietor: QUALCOMM INCORPORATED, San Diego, California 92121-1714 (US)
(72) Inventor: KHOSHNEVISAN, Mostafa, San Diego, California 92121-1714 (US); ZHANG, Xiaoxia, San Diego, California 92121-1714 (US); SUN, Jing, San Diego, California 92121-1714 (US); LUO, Tao, San Diego, California 92121-1714 (US)
(74) Representative: Tomkins & Co
(86) International application number: PCT/US2022/022796
(87) International publication number: WO 2022/212685

(56) References cited:
- LENOVO ET AL: "Corrections to Additional enhancements for NB-IoT", vol. RAN WG1, no. e-Meeting; 20200525 - 20200605, 23 June 2020 (2020-06-23), XP051904359, Retrieved from the Internet <URL:https://ftp.3gpp.org/tsg_ran/TSG_RAN/TSGR_88e/Docs/RP-200699.zip 36213_CR1335_(Rel-16)_ R1-2005178.docx> [retrieved on 20200623]
- VIVO: "Handling of overlapping discussion across different Rel-17 items", vol. TSG RAN, no. Electronic Meeting; 20201207 - 20201211, 30 November 2020 (2020-11-30), XP051963209, Retrieved from the Internet <URL:https://ftp.3gpp.org/tsg_ran/TSG_RAN/TSGR_90e/Docs/RP-202646.zip RP-202646-Handling of overlapping discussion across different Rel-17 items_Final.doc> [retrieved on 20201130]
- LENOVO ET AL: "On coverage enhancement for RedCap", vol. RAN WG1, no. E-meeting; 20200525 - 20200605, 15 May 2020 (2020-05-15), XP051885600, Retrieved from the Internet <URL:https://ftp.3gpp.org/tsg_ran/WG1_RL1/TSGR1_101-e/Docs/R1-2003829.zip R1-2003829_coverage_final.docx> [retrieved on 20200515]

## Description

### FIELD OF TECHNOLOGY

The present disclosure relates to wireless communications, including downlink channel repetition for common search space sets.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Wireless communications systems may support retransmission of control information and data in order to increase the likelihood of successful receipt of the control information and data at the receiving device. In some cases, various resources for retransmission of control information and data are configured by a transmitting device.

LENOVO ET AL: "Corrections to Additional enhancements for NB-loT", 3GPP DRAFT; RP-200699, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE·, vol. RAN WG1, no. e-Meeting; 20200525 - 20200605 23 June 2020, XP051904359 provides for corrections to additional enhancements for NB-IoT.

VIVO: "Handling of overlapping discussion across different Rel-17 items", 3GPP DRAFT; RP-202646, 30 November 2020 (2020-11-30), XP051963209, is directed to handling of overlapping discussion across different REL17 items.

LENOVO ET AL: "On coverage enhancement for RedCap", 3GPP DRAFT; R1-2003829, 15 May 2020 (2020-05-15), XP051885600 is a discussion on coverage enhancement for RedCap.

### SUMMARY

The invention is described herein with reference to the appended claims. The described techniques relate to improved methods, systems, devices, and apparatuses that support downlink channel repetition for common search space sets.

Generally, the described techniques provide for supporting downlink control channel repetition, where the downlink control channel includes downlink control information associated with a random access procedure, scheduling of system information, or a paging procedure (e.g., a type 0, 0A, 1, or 2 downlink control information).

The invention is defined by the appended claims.

There is provided an apparatus for wireless communications for use in a UE according to claim 1. There is provided an apparatus for wireless communications for use at a base station according to claim 3. Corresponding methods for wireless communications are provided in claims 5 and 6.

### BRIEF DESCRIPTION OF THE DRAWINGS

FIG. 1 illustrates an example of a wireless communications system that supports downlink channel repetition for common search space sets in accordance with aspects of the present disclosure.
FIG. 2 illustrates an example of a wireless communications system that supports downlink channel repetition for common search space sets in accordance with aspects of the present disclosure.
FIG. 3 illustrates an example of a wireless communications system that supports downlink channel repetition for common search space sets in accordance with aspects of the present disclosure.
FIG. 4 illustrates an example of a process flow diagram that supports downlink channel repetition for common search space sets in accordance with aspects of the present disclosure.
FIGs. 5 and 6 show block diagrams of devices that support downlink channel repetition for common search space sets in accordance with aspects of the present disclosure.
FIG. 7 shows a block diagram of a communications manager that supports downlink channel repetition for common search space sets in accordance with aspects of the present disclosure.
FIG. 8 shows a diagram of a system including a device that supports downlink channel repetition for common search space sets in accordance with aspects of the present disclosure.
FIGs. 9 and 10 show block diagrams of devices that support downlink channel repetition for common search space sets in accordance with aspects of the present disclosure.
FIG. 11 shows a block diagram of a communications manager that supports downlink channel repetition for common search space sets in accordance with aspects of the present disclosure.
FIG. 12 shows a diagram of a system including a device that supports downlink channel repetition for common search space sets in accordance with aspects of the present disclosure.
FIGs. 13 through 18 show flowcharts illustrating methods that support downlink channel repetition for common search space sets in accordance with aspects of the present disclosure.

### DETAILED DESCRIPTION

Some wireless communications systems may support physical downlink control channel (PDCCH) repetition in order to improve communication reliability and efficiency. That is, by repeating PDCCH transmissions, a receiving user equipment (UE) may have a higher probability of successful decoding of the PDCCH, and thus is able to identify various control information including scheduling information for other channels. When two PDCCH transmissions are repeated, they may be transmitted in different search space (SS) sets, and the different SS sets are indicated to a UE as linked. When a UE receives an indication that two SS sets carrying PDCCH are linked, the UE identifies that the PDCCH within the later of the two SS sets is a repetition of the PDCCH in the first of the two SS sets, which may support soft combining and decoding of downlink control information (DCI) from both PDCCHs of the linked SS sets. Thus, to support the PDCCH repetition, the UE may receive an indication that the SS sets are linked.

Common search space (CSS) sets may be configured via a message transmitted by a base station to a UE. The CSS sets may be configured by type or purpose of the PDCCH carried in those CSS sets. For example, wireless communications systems may support a configuration message that indicates a CSS set for any of PDCCH types 0, 0A, 1, and 2 is to be monitored for transmission for a corresponding to PDCCH type. However, this configuration message or other related signaling may not be configured to support indicating to a UE that CSS sets are linked for purposes of PDCCH repetition for these types of PDCCHs.

Implementations described herein provide techniques for indicating to a UE that two CSS sets for Type0/0A/1/2 PDCCHs are linked. For example, when two CSS sets are configured as linked CSS sets, and the UE is instructed to monitor (e.g., using a PDCCH configuration message) one of the two linked CSS sets, then the two CSS sets may be linked for PDCCH repetition of the indicated type. In some examples, the PDCCH configuration message may be updated to support indication of multiple CSS sets. Thus, using these techniques, the UE may be configured to monitor two linked CSS sets for decoding of a DCI associated with the CSS set type.

Additional techniques described herein support determining a number of PDCCH candidates per aggregation level when PDCCH repetition for the given types is activated. For example, the number of candidates may per an aggregation level may be assigned to the CSS sets or distributed between the CSS sets. Further techniques support linking CSS sets when one of the sets has an index of 0 and UE capability reporting for support of PDCCH repetition of the given types. These and other techniques are further described with respect to the figures.

Aspects of the disclosure are initially described in the context of wireless communications systems. Aspects of the disclosure are further described with respect to wireless communications system illustrating PDCCH repetition and a process flow diagram illustrating signaling and processing to support PDCCH repetition. Aspects of the disclosure are further illustrated by and described with reference to apparatus diagrams, system diagrams, and flowcharts that relate to downlink channel repetition for common search space sets.

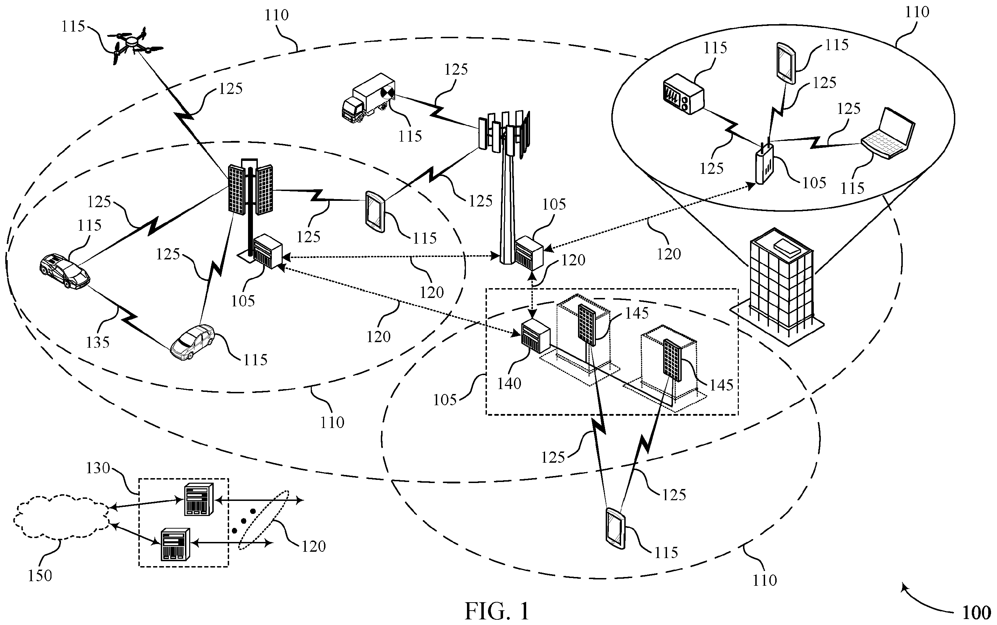

**FIG.** 1 illustrates an example of a wireless communications system 100 that supports downlink channel repetition for common search space sets in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

The wireless communications system 100 may support channel repetition in order to increase the communication reliability. For example, a base station 105 may repeat PDCCH transmissions to increase the likelihood that a receiving UE 115 decodes the DCI of the PDCCH and thus identifies control and scheduling information. Linked SS sets may include the repeated PDCCH transmissions, and the linked SS sets may be indicated to the UE 115 as linked. As such, the UE 115 may be able to soft combine PDCCH transmissions from the linked SS sets in order to decode the DCI (e.g., the same DCI payload may be transmitted in the PDCCH repetitions).

CSS sets may be configured at the UE 115 via a message transmitted by the base station 105. In some examples, the CSS sets may be configured by type or purpose of the PDCCH carried by the CSS sets. For example, type 0, type 0A, type 1, and type 2, PDCCH-CSS sets may be indicated to the UE 115 using a common PDCCH message. However, this configuration message and other related messages may not support indication of PDCCH-CSS set linkage for PDCCH repetitions for these types of PDCCHs. For example, types 0 and 0A PDCCH-CSS sets may relate to scheduling of system information; type 1 PDCCH-CSS sets may support random access procedures, and type 2 PDCCH-CSS sets may support paging. Since the configuration messages may not support indication of CSS set linkage to support repetition of these PDCCH types, these types of PDCCHs may be unreliable or inefficient (e.g., repetition to increase likelihood of decoding at the UE may not be supported).

Techniques described herein provide signaling to support PDCCH repetition for type 0, 0A, 1, and 2 PDCCH-CSS sets. The signaling may include a first control message that indicates a configuration that links two CSS sets for repetition and a second control message that indicates that at least one of the two CSS sets is to be monitored by the UE 115 for PDCCH transmission. Based on the indication of one of the linked CSS sets by the second control message (e.g., a *PDCCH-ConfigCommon message*)*,* the CSS sets may be linked for repetition of the PDCCH type indicated by the second control message. Additionally or alternatively, a control message may indicate that a first index corresponding to a first CSS set and a second index corresponding to a second CSS set correspond to the same common search space set type (e.g., a PDCCH type 0, 0A, 1, or 2 PDCCH-CSS set), thus indicating that these CSS sets are linked for PDCCH repetition.

Further techniques described herein support PDCCH repetition, including techniques for identifying a number of control channel candidates (e.g., PDCCH candidates, a search space, or some other candidate time and/or frequency location of a downlink resource) per aggregation level in a CSS set, techniques for CSS set monitoring when one of the linked CSS set has an index of 0, and PDCCH repetition capability signaling. Thus, the described techniques may generally support PDCCH repetition, which may increase communication reliability and efficiency in communication systems by increasing the likelihood that a UE 115 successfully decodes DCI from a PDCCH transmission.

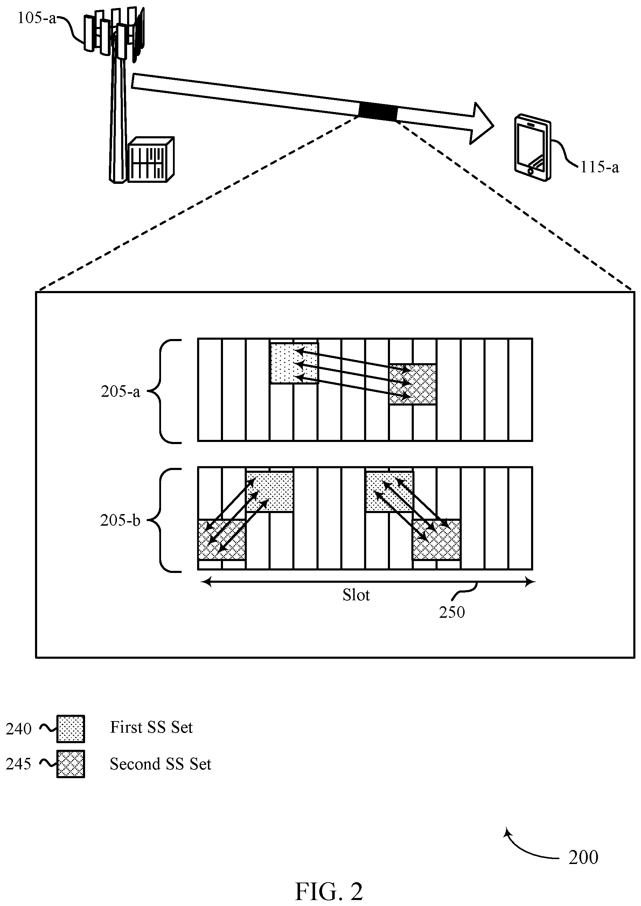

**FIG.** 2 illustrates an example of a wireless communications system 200 that supports downlink channel repetition for common search space sets in accordance with aspects of the present disclosure. The wireless communications system 200 may implement aspects of wireless communications system 100. For example, the wireless communications system 200 includes a base station 105-a and a UE 115-a, which may be examples of the corresponding devices of FIG. 1. FIG. 2 illustrates examples of communications 205 between the base station 105-a and the UE 115-a. The wireless communications system may support PDCCH repetition, where a linked PDCCH is transmitted in respective linked SS sets.

To support PDCCH blind decoding, the base station 105-a may configure the UE 115-a with a set of control resource sets (CORESETs) in a bandwidth part of a serving cell. Each CORESET may be associated with an active transmission configuration indicator (TCI) state. RRC signaling may be used to configure the resource blocks in the frequency domain and the number of symbols of the CORESET as part of the CORESET configurations. A PDCCH SS set may be associated with one CORESET, and an upper limit (e.g., 10) search space sets in a bandwidth part of the component carrier/serving cell may be determined. Control signaling, such as RRC signaling, may be used to configure a search space set with an associated CORESET identifier, monitoring slot periodicity and offset, monitoring symbols within the slot (e.g., to determine PDCCH monitoring occasions of the search space set), search space set type (e.g., CSS set or UE-specific SS (USS) set), DCI formats to monitor, and the number of PDCCH candidates for a given aggregation level.

PDCCH candidates may be defined as a part of the search space set configurations. A PDCCH candidate with a given aggregation level and a given candidate index is defined in a given search space set. A DCI may be received in one PDCCH candidate, and the UE 115-a may monitor the PDCCH candidates in search space sets to identify and decode the DCI. One or more candidates with a cyclic redundancy check pass (successful decoding) may correspond to a decoded DCI, and the UE 115-a may blindly decode the DCI.

As described herein, the wireless communications system 200 may support PDCCH repetitions, where each repetition is a PDCCH candidate. Two PDCCH candidates may carry the same DCI, and thus may be considered "linked." The two linked PDCCH candidates may have the same aggregation level (same number of control channel elements), and the DCI payload transmitted using the two PDCCH candidates may be the same. UE 115-a may perform soft combining of multiple PDCCH candidates to decode the DCI. To support the soft combining, the UE 115-a may be configured to identify the linked PDCCH candidates. To support the linking, two search space sets (carrying the PDCCH candidates) may be linked via control signaling, such as RRC signaling. A monitoring occasion of two linked search space sets may be one-to-one mapped. PDCCH candidates with the same aggregation level and the same candidate index in the two linked search space sets may be linked, and two linked search space sets may be configured with the same number of candidates for each aggregation level.

A first SS set 240 and a second SS set 245 are illustrated in the slot 250. Arrows across the first SS set 240 and the second SS set 245 illustrate linked PDCCH candidates within the respective search space sets. Communications 205-a and communications 205-b illustrate possible search space set configurations, but it should be understood that other configurations are contemplated within the scope of the present disclosure.

Various types of PDCCH SS Sets may be supported by the wireless communications system 200. Example CSS sets include Type 0, Type 0A, Type 1, Type 2, and Type 3 PDCCH-CSS sets. A USS set may also be supported by the wireless communications system 200 and may be configured using various fields of control signaling. A Type0-PDCCH CSS set may be configured by a *pdcch-ConfigSIB1* field in a master information block (*MIB*) or by *searchSpaceSIB1* (system information block) in *PDCCH-ConfigCommon* or by *searchSpaceZero* in *PDCCH-ConfigCommon* for a DCI format with cyclic redundancy check (CRC) scrambled by a system information radio network temporary identifier (SI-RNTI) on the primary cell of the master cell group (MCG). A Type0A-PDCCH CSS set may be configured by *searchSpaceOtherSystemInformation* in *PDCCH-ConfigCommon* for a DCI format with CRC scrambled by SI-RNTI on the primary cell of the MCG. A Type1-PDCCH CSS set may be configured by *ra-SearchSpace* in *PDCCH-ConfigCommon* for a DCI format with CRC scrambled by a random access RNTI (RA-RNTI), a MsgB-RNTI, or a temporary cell RNTI (TC-RNTI) on the primary cell. A Type2-PDCCH CSS set may be configured by *pagingSearchSpace* in *PDCCH-ConfigCommon* for a DCI format with CRC scrambled by a paging RNTI (P-RNTI) on the primary cell of the MCG. A Type3-PDCCH CSS set may be configured by *SearchSpace* in *PDCCH-Config* in *PDCCH-Config* with *SearchSpaceType = common* for DCI formats with CRC scrambled by interruption RNTI (INT-RNTI), slot format indication RNTI (SFI-RNTI), transmission power control (TPC) physical uplink shared channel (PUSCH) RNTI (TPC-PUSCH-RNTI), TPC-PUCCH-RNTI, TPC sounding reference signal RNTI (TPC-SRS-RNTI), or channel state RNTI (CS-RNTI) and, for the primary cell, cell-RNTI (C-RNTI), modulation and coding scheme cell RNTI (MCS-C-RNTI), channel state RNTIs (CS-RNTI(s)), or power saving RNTI (PS-RNTI). A USS may be configured by *SearchSpace* in *PDCCH-Config* with *searchSpaceType = ue-Specific* for DCI formats with CRC scrambled by C-RNTI, MCS-C-RNTI, semi-persistent CSI-RNTI (SP-CSI-RNTI), CS-RNTI(s), sidelink RNTI (SL-RNTI), SL-CS-RNTI, or SL semi-persistent scheduling V-RNTI.

The Type0-PDCCH CSS set and Type0A-PDCCH CSS may be used to carry DCI for scheduling or acquiring system information. The Type1-PDCCH CSS set may be used to carry DCI for scheduling a Msg2 of a random access procedure, and in some cases, the DCI that schedules the Msg2 may be referred to as at least a portion of the Msg2 of the random access procedure. The Type2-PDCCH CSS set may be used to carry DCI associated with a paging procedure. Further, as discussed herein, the Type0, 0A, 1, and 2 PDCCH CSS sets may be configured by a *PDCCH-ConfigCommon* message, while the Type3-PDCCH CSS set and the USS set may be configured using a *SearchSpace* message in a *PDCCH-Config* message. More particularly, the Type3 and PDCCH USS sets may be configured differently than the Type0, 0A, 1, and 2 PDCCH CSS sets.

The *PDCCH-ConfigCommon* message (e.g., an RRC message), which may be used to indicate to the UE 115-b, which SS sets to monitor for the respective PDCCH types, may include a mapping of various types of common search space sets to a search space set identifier or index. For example, the PDCCH-ConfigCommon message may include a mapping of *searchSpaceZero, SearchSpaceSIB1, searchSpaceOtherSystemInformation, pagingSearchSpace,* and *ra-SearchSpace* common search space sets to a respective SS identifier/index. *SearchSpaceZero* (e.g., a search space with index 0) may be a SS set that is configured in the initial BWP (BWP#0) and may be indicated by a MIB or by *PDCCH-ConfigCommon. SearchSpaceZero* may be characterized by an integer value (e.g., via MIB or *PDCCH-ConfigCommon*) between 0 and 15, and the properties of the SS set (e.g., time domain behavior including monitoring occasions) may be based on fixed tables that are preconfigured and that correspond to the indicated integer value. Other search space sets in the *PDCCH-ConfigCommon* message may be configured using RRC signaling (e.g., *SearchSpace IE*)*,* as described herein. More particularly, the RRC signaling may be used to configure various parameters or characteristics of the search space set, such as SS set index/ID, CORESET ID, monitoring slot periodicity and offset, etc. For example, the *SearchSpace IE,* may include the *SearchSpaceID* field (which may not be 0) as well as the other parameters for the SS set.

For Type0, 0A, 1, and 2-PDCCH CSS sets, the corresponding SearchSpaceID is configured for searchSpaceSIB1 (Type0), searchSpaceOtherSystemInformation (Type0A), ra-SearchSpace (Type1), and pagingSearchSpace (Type2) in the *PDCCH-ConfigCommon* message. In some examples, there may be one SS set for each type configured, and the same SS set for two or more of these PDCCH types may be configured. Thus, the indexes/IDs may be configured for these SS set types using *SearchSpace IE,* and these configured indexes/IDs may be indicated as corresponding to a particular CSS set type using the indication in the *PDCCH-ConfigCommon* message. Type3-PDCCH CSS set and USS sets may be directly configured in SearchSpace IE. Two or more SS sets may be configured for each of these PDCCH types (e.g., Type3 and USS).

For Type-3 CSS sets or USS sets, PDCCH repetition may be configured and enabled by associating or linking two SS sets for the SS set configuration. In addition, the two linked SS sets may be configured with the same periodicity, offset, duration, number of monitoring occasions within a slot, SS set Type (CSS or USS), DCI formats to monitor, and/or the number of candidates for each aggregation level. For type 0, 0A, 1, and 2 PDCCH CSS sets, the SS identifier may be configured for each type separately.

Implementations described herein provide signaling techniques to support or prevent PDCCH repetition. According to example implementations described herein, a UE, such as UE 115-a, may not expect that the SS set configured for each of these CSS set types (0, 0A, 1, and 2) is linked to another SS set in accordance with a confirmatory rule applied by the UE. Thus, the base station 105-b may be configured to not indicate a SS set identifiers, for one of these types, that is linked to another SS set.

Other implementations described herein provide signaling techniques to support PDCCH repetition using type 0, 0A, 1, and 2 PDCCH CSS sets. More particularly, the signaling techniques support linking CSS sets for these types of CSS sets. In one example signaling technique, if the *PDCCH-ConfigCommon* message indicates a SS set identifier that corresponds to a SS set that is linked (e.g., using RRC configuration) to another SS set, then the PDCCH repetition is configured for the PDCCH CSS set type. Thus, a first control message (e.g., RRC) may include a configuration that links the first SS set 240 with the second SS set 245 for PDCCH repetition. A second control message (e.g., *PDCCH-ConfigCommon*) may indicate an identifier, for one of the CSS set types, that corresponds to either the first SS set 240 or the second SS set 245, which are linked by configuration, resulting in PDCCH repetition for the corresponding PDCCH type.

According to another repetition signaling technique, the RRC configuration under *PDCCH-ConfigCommon* may be updated to support two SS identifiers for each PDCCH type. More particularly, *searchSpaceSIB1* (Type0), *searchSpaceOtherSystemInformation* (Type0A), *ra-SearchSpace* (Type1), and/or *pagingSearchSpace* (Type2) of *PDCCH-ConfigCommon* may point to two SS set identifiers, thus activating PDCCH repetition for the corresponding PDCCH type. For example, the *pagingSearchSpace* field may include a first index that corresponds to the first SS set 240 and a second index that correspond to the second SS set 245, thus activating Type2-PDCCH repetition in the first SS set 240 and the second SS set 245.

As described herein, when the first SS set 240 and the second SS set 245 are linked, the configuration restrictions as described herein may be applicable (e.g., same periodicity, offset, number of monitoring occasions with a slot or transmission time interval, SS set Type (CSS or USS), DCI formats to monitor, number of candidates for each aggregation level). When the UE 115-a determines that PDCCH repetition is configured via any of these described signaling techniques, the UE 115-a may monitor linked PDCCH candidates across two linked monitoring occasions of the two linked SS sets for PDCCH repetition for a DCI format with CRC scrambled by SI-RNTI (Type0/0A), RA-RNTI/MSGB-RNTI/TC-RNTI (Type1), or P-RNTI (Type2). Further considerations and capability signaling for PDCCH repetitions of these types are further described herein.

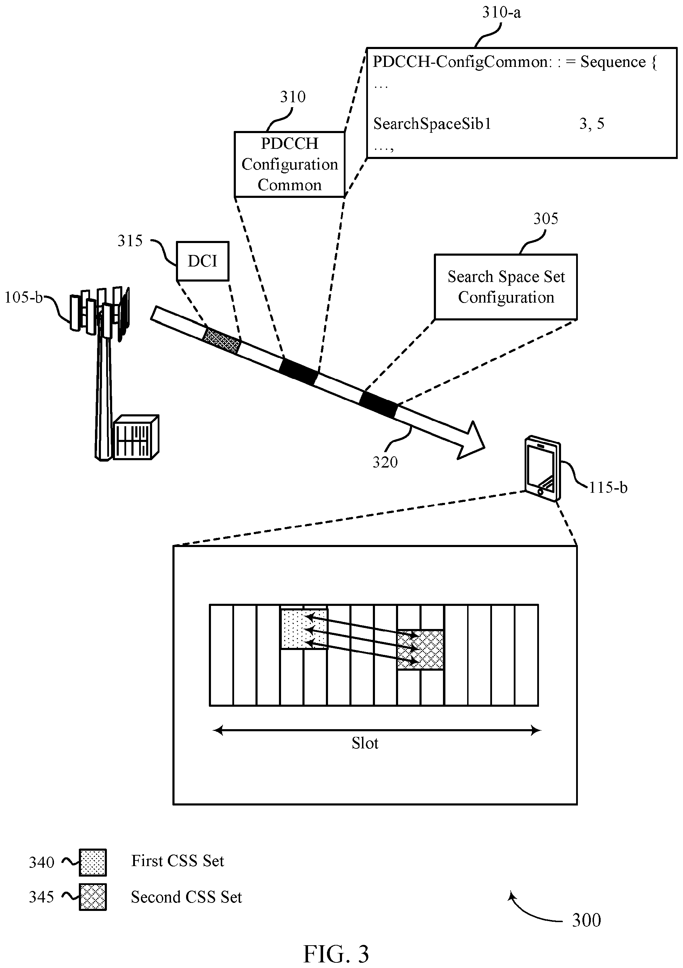

**FIG.** 3 illustrates an example of a wireless communications system 300 that supports downlink channel repetition for common search space sets in accordance with aspects of the present disclosure. The wireless communications system 300 may implement aspects of wireless communications system 100. For example, the wireless communications system 300 includes a base station 105-b and a UE 115-b, which may be examples of the corresponding devices described with respect to FIG. 1 and FIG. 2. FIG. 3 illustrates examples of communications 320 between the base station 105-b and the UE 115-b. The wireless communications system 300 may support PDCCH repetition, where a linked PDCCH is transmitted in a respective linked SS set.

As described herein, various types of signaling may be used to configure the UE 115-b for PDCCH repetition for type 0, 0A, 1, and 2 PDCCH-CSS sets. In some examples, the base station 105-b may transmit first control message 305 that indicates a search space set configuration that links, for repetition, a first CSS set 340 with the second CSS set 345. The same or a different configuration may also specify configuration parameters, such as periodicity, offset, number of monitoring occasions within a slot, search space set type, DCI formats to monitor, number of candidates for each aggregation level etc. for the first CSS set 340 and the second CSS set 345. These parameters may be the same in order to support PDCCH repetition. The base station 105-b may also transmit a second control message 310 (e.g., *PDCCH-ConfigCommon*) that indicates an index or identifier corresponding to the first CSS set 340 or the second CSS set 345. Since the first CSS set 340 and the second CSS set 345 are linked by configuration, the indication by the second control message of the index corresponding to one of the CSS sets configures PDCCH repetition.

According to another implementation, the control message 310 (e.g., *PDCCH-ConfigCommon*) may indicate both an index or identifier corresponding to the first CSS set 340 and an index or identifier corresponding to the second CSS set 345 for one of the PDCCH CSS set types, thus configuring PDCCH repetition for the PDCCH CSS set type using the indicated CSS sets. As illustrated in second control message 310-a, the *searchSpaceSib1* CSS set type indicates search space set identifiers 3 and 5, which may indicate that CSS sets corresponding to those identifiers (e.g., configured via a separate *SearchSpace IE* message) are linked for repetition of a Type 0 PDCCH. Thus, using either of these signaling techniques, the UE 115-a may monitor the first CSS set 340 and the second CSS set 345 for the PDCCH carrying DCI. In some cases, the UE 115-b may soft combine the DCI from both the first CSS set 340 and the second CSS set 345 for decoding.

When the UE 115-a is configured with Type 0, 0A, or 2 PDCCH-CSS sets, the number of PDCCH candidates per aggregation level may be determined using a table that maps aggregation levels to the number of candidates. For example, there may be four PDCCH candidates for a control channel element aggregation level of four in a CSS set, there may be two PDCCH candidates for a control channel element aggregation level of eight in the CSS set, and there may be one PDCCH candidate for a control channel element aggregation level of sixteen in the CSS set. If a UE 115-a is configured with PDCCH repetition for Type 0, 0A, or 2 PDCCH-CSS sets, it may be unclear how these mappings of PDCCH candidates to control channel element aggregation levels are to be applied.

Techniques described herein support determining a number of PDCCH candidates for each aggregation level using one or more options when the UE 115-b is configured with PDCCH repetition for type 0, 0A, or 2 PDCCH-CS sets. According to a first option, the number of pairs of linked PDCCH candidates for each aggregation level (e.g., four, eight, and sixteen) may be based on the mappings described above (e.g., a table of mappings). Thus, the total number of PDCCH candidates for each PDCCH type may be double the number listed in the table or in the mapping. For example, according to this option, at the aggregation level of eight, the first CSS set 340 may have two PDCCH candidates, and the second CSS set may have two PDCCH candidates, where each of the two candidates in the first CSS set 340 is linked to a respective PDCCH candidate in the second CSS set 345.

According to a second option for determining the number of PDCCH candidates for linked Type 0, 0A, and 2 PDCCH CSS sets, the number of pairs of linked PDCCH candidates for each aggregation level (e.g., four, eight, and sixteen) for each CSS set may be based on half the number in the mapping or table. As such, each SS set of the two linked SS sets has half the candidates listed in the table or mapping. For example, according to this option, at the aggregation level of eight, the first CSS set 340 may have one candidate (e.g., half of two), and the second CSS set 345 may have one candidate, where the candidate in the first CSS set 340 is linked to the candidate in the second CSS set 345.

According to a third option for determining the number of PDCCH candidates for linked Type 0, 0A, and 2 PDCCH CSS sets. The choice between the first option and the second option described above may depend on whether the linked candidates are in the same slot or not (e.g., whether the first CSS set 340 and the second CSS set 345 are positioned with the same transmission time interval or slot-in inter-slot or intra-slot configuration). For example, for an intra-slot repetition, when two linked monitoring occasions associated with the two linked CSS sets are in the same slot, the number of pairs of linked PDCCH candidates for each aggregation level may be half the mapped number (e.g., the second option above). For inter-slot PDCCH repetition, when two linked monitoring occasions associated with the two linked CSS sets are in different slots, the number of pairs of linked PDCCH candidates for each aggregation level is based on the mapped number (e.g., the first option above). This technique may ensure that the number of candidates per slot remains the same, whether PDCCH repetition is configured or not.

In some cases, the mapping or table is used when one of the linked CSS sets is a CSS set with an index 0 ("SearchSpaceZero"). Thus, the three options described herein may be applied when one of the linked sets is the SearchSpaceZero set. Otherwise, the number of PDCCH candidates for each aggregation level may be RRC configured for each of the two linked CSS sets, and the numbers should be the same across the two linked CSS sets. As described herein, the number of candidates may not be RRC configured for SS sets with index of zero, because the SearchSpaceZero set may be based on a fixed or mapped configuration.

As described herein, some configuration restrictions may be applied for two linked SS sets such that a one-to-one mapping exists for monitoring occasions between the two linked SS sets. For example, for intra-slot PDCCH repetition, the periodicity, offset, duration, and number of monitoring occasions within a slot may be the same across both SS sets. However, for SS set zero, these parameters may not be directly configured. Instead, a value between 0 and 15 (indicated in the MIB or PDCCH-ConfigCommon) defines the monitoring occasions (e.g., frames, slots, symbols of the monitoring occasions) based on fixed tables that may be preconfigured. The tables may specify these configurations corresponding to FR1, FR2, various multiplexing patterns, etc. Further, some configurations within the table may be dependent on the recent synchronization signal block (SSB) index i. The SSB may be determined based on the most recent of: (1) a MAC-CE activation command indicating a TCI state of the active bandwidth part that includes a CORESET with index 0, where the TCI state includes a CSI-RS which is quasi-co-located with the synchronization signal (SS) or physical broadcast channel (PBCH) block, or (2) a random access procedure that is not initiated by a PDCCH order that triggers a contention-free random access procedure. Due to various circumstances, the SSB index may change over time, which may result in a change of configurations for the CSS set 0, which may be linked to another CSS set resulting an unclear mappings of monitoring occasions between the sets, if linked.

According to a first option, the UE 115-b may not expect that a SS set identifier of either of the two linked SS sets to be zero in accordance with a confirmatory rule applied by the UE 115-b. That is, the base station 105-a may not configure SS set 0 to be linked with another SS set, and as such, PDCCH repetition may not be applicable for PDCCH candidates in SS set zero.

According to a second option, SS set zero linking may be supported by ensuring that the other linked SS set is configured with the RRC parameters, such as periodicity, slot offset, duration, monitoring symbols within the slot, such that the monitoring occasions of the linked SS set are mapped one-to-one with the monitoring occasions of the SS set 0. For example, if SS set 0 is to be used as a linked SS set for PDCCH repetition, then the base station 105-a is to configure the other linked SS set such that the monitoring occasions are one-to-one mapped. For SS set 0, these parameters cannot be directly configured. For example, a value between 0-15 (indicated in the MIB or PDCCH-ConfigCommon) defines the monitoring occasions (e.g., frames, slots, symbols of monitoring occasions) for SS set 0 based on fixed tables, and the other linked set may be RRC configured with corresponding parameters.

According to a third option, if one of the two linked SS sets is SS set 0, for monitoring of Type0, 0A, 1, 2-PDCCH CSS sets, the monitoring occasions of the other SS set that are mapped to the monitoring occasions of SS set 0 are monitored, and the additional configured monitoring occasions of the other SS set may not be monitored. The mapping between the monitoring occasions of SS set 0 and the other SS set can be based on being in the same slot (for intra-slot case), or based on being in consecutive slots (for inter-slot case), and also based on number of monitoring occasions of SS set 0 within a duration. For example, if SS set 0 has 10 monitoring occasions in an x millisecond duration, and the other SS set is configured with 30 monitoring occasions during the same duration, 10 pairs of monitoring occasions may be one-to-one mapped, and thus monitored by the UE 115-b. Thus, as the monitoring configuration of SS set zero may change due to the change in the SSB index, this technique may ensure that mapped monitoring occasions are monitored for PDCCH repetition regardless of the change in the configuration.

To support PDCCH repetition for type 0, 0A, 1, and 2 PDCCH CSS sets, the UE 115-b may indicate, to the base station 105-b, its capability of supporting these types of PDCCH repetitions. In one example, a bit may indicate the UE's capability to support each of the PDCCH types of Type 0, 0A, 1, and 2. In another example, a separate bit may be used to indicate support for some or all of the types separately (e.g., using a bitmap or set of bits). In some cases, the UE 115-b may indicate its support of PDCCH CSS sets based on the RNTI used for CRC for the associated DCI. For example, the UE 115-b may indicate support of the SI-RNTI (Type0 and 0A) or RA-RNTI, MSGB-RNTI, TC-RNTI (Type1), and/or P-RNTI (Type2). The UE 115-b may also indicate whether SS set 0 can be linked with any other SS set for the purposes of PDCCH repetition for Type0, 0A, 1, 2 PDCCH CSS sets. Additionally or alternatively, the UE 115-b may indicate whether PDCCH repetition for Type0, 0A, 1, 2 PDCCH CSS sets is supported in an inter-slot configuration, intra-slot configuration, or both. In some cases, any of these capability indications may transmitted in conjunction with the UE's support of PDCCH repetition for USS set and/or Type-3 CSS set (pre-requisite relationship). As such, the RRC configurations (e.g., the RRC configurations of the CSS sets and the *PDCCH-ConfigCommon* monitoring signaling) transmitted by the base station 105-b may be based on the UE capability indications. Thus, when repetition is RRC-configured, the UE 115-b may monitor PDCCH for Type0, 0A, 1, or 2 PDCCH CSS sets using the linked CSS sets, monitoring occasions, and PDCCH candidates.

Thus, using the techniques described herein, the UE 115-b may report its support of PDCCH repetition of various types. The base station 105-b may transmit a first control message 305 and/or a second control message 310 to configure a first CSS set 340 and a second CSS set 345 to be linked for PDCCH repetition based on the UE capability reporting. The UE 115-a may monitor the first CSS set 340 and the second CSS set 345 based on the indicated configurations in order to decode DCI 315 encoded in the PDCCH candidates. In some cases, the UE 115-b may determine the number of PDCCH candidates per aggregation level based on tables and/or the configurations. Further, if one of the linked sets is SS set 0, then the UE 115-a may determine the mapped monitoring occasions using the techniques described herein (e.g., the configurations are mapped, or the UE 115-b monitors the mapped monitoring occasions from the CSS set that is linked to the SS set 0).

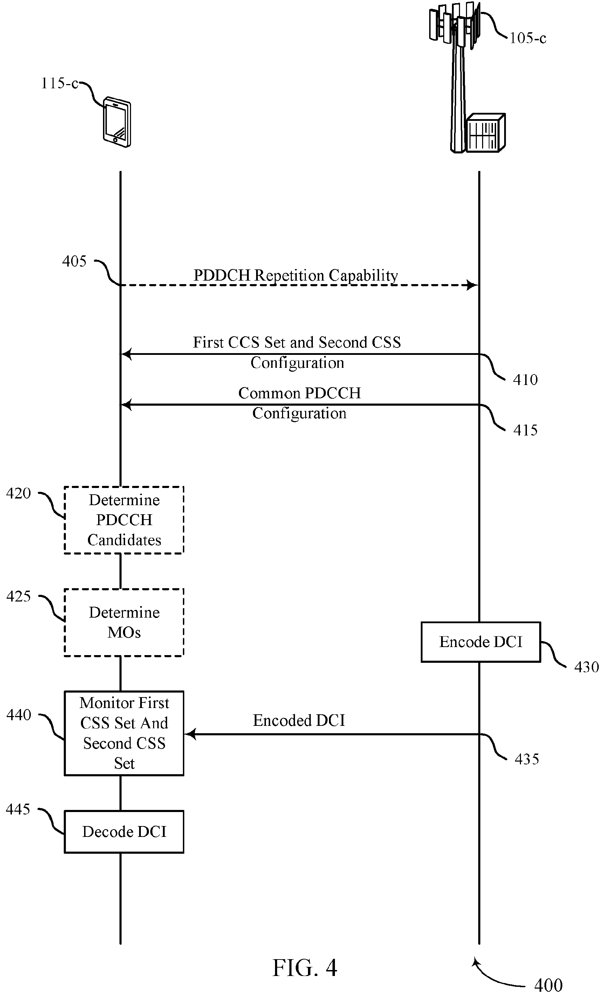

**FIG. 4** illustrates an example of a process flow diagram 400 that supports downlink channel repetition for common search space sets in accordance with aspects of the present disclosure. The process flow diagram 400 may be implemented by aspects of the wireless communications systems 100, 200, and 300, as described with respect to FIGs. 1 through 3. For example, the process flow diagram 400 includes a UE 115-c and a base station 105-c, which may be examples of the corresponding devices as described with respect to FIGs. 1 through 3.

At 405, the UE 115-c may transmit, to the base station 105-c, an indication that the UE 115-c supports repetition of the downlink control channel that includes downlink control information associated with the random access procedure, the scheduling of system information, the paging procedure, or a combination thereof (e.g., type 0, 0A. 1, and 2 PDCCH-CSS sets). The indication may be based on RNTI type and/or may specify support of linkage of search space sets with search space set zero. The indication may also specify support of inter-slot linkage (e.g., the CSS sets are positioned inter-slot) and/or intra-slot linkage. The support may also be indicated with or based on support of UE-specific SS set linkage or Type 3 SS set linkage. Any combination of these support indications may be transmitted by the UE 115-c.

At 410 and/or 415, the UE 115-c may receive an indication that a first common search space set and a second common search space set are linked for repetition of a downlink control channel that includes downlink control information associated with a random access procedure, scheduling of system information, or a paging procedure (e.g., Type 0, 0A, 1, or 2 PDCCH-CSS set linkage). In some cases, at 410, the UE 115-c may receive a first control message that includes a configuration that links, for repetition, the first common search space set with the second common search space set. The UE 115-c may receive a second control message that indicates that the first common search space set is to be monitored for the downlink control channel based at least in part on the downlink control information being associated with one of the random access procedure, the scheduling of system information, or the paging procedure. In some cases, the UE 115-c may receive, at 415, a control message that indicates that both the first common search space set and the second common search space set are linked and are to be monitored for the downlink control channel based at least in part on the downlink control information being associated with one of the random access procedure, the scheduling of system information, or the paging procedure. The control message may be an example of a common physical downlink control channel configuration message (e.g., a *PDCCH-ConfigCommon* message) that indicates that both a first index associated with the first common search space set and a second index associated with the second common search space set correspond to a same common search space set type.

At 420, the UE 115-c may determine a number of downlink control channel candidates for the first common search space set and the second common search space set for a control channel element aggregation level of a set of control channel element aggregation levels. The UE 115-c may monitor the first common search space set and the second common search space set based at least in part on the determined number of downlink control channel candidates. In some cases, the number of downlink control channel candidates is determined based on a mapping between the aggregation level and the number of candidates. In some cases, the number of candidates is applied to each common search space set, or half the number may be applied to each common search space set. The determination of whether to apply the number or half the number to each set may be based on whether the sets are positioned in the same TTI or in different TTIs. In some examples, the number of candidates may be RRC configured.

At 425, the UE 115-c may determine the monitoring occasions for the first common search space set and the second common search space set. In some cases, the determination may be based on the RRC configuration of each of the sets, which may have one-to-one monitoring occasion mappings. However, in some examples, one of the sets may be SS set 0, and thus, the linked set may be RRC configured to match the monitoring occasion configuration of the SS set 0. In other cases when one of the linked CSS sets is SS set 0, then the UE 115-c may determine to monitor the monitoring occasions of the linked set that map to monitoring occasions of the SS set 0.

At 430, the base station 105-c may encode the downlink control information in a first downlink control channel candidate and a second downlink control channel candidate that is linked to the first downlink control channel candidate based at least in part on the indication. At 435, the base station 105-c may transmit, to the UE 115-c, the encoded downlink control information in the first common search space set that includes the first downlink control channel candidate and in the second common search space set that includes the second downlink control channel candidate.

At 440, the UE 115-c may decode the downlink control information using at least one of the first physical downlink control channel candidate of the first common search space set or the second physical downlink control channel candidate of the second common search space set, where the first physical downlink control channel candidate is linked with the second physical downlink control channel candidate. In some cases, the UE 115-c may communicate with the base station 105-c based on the decoded downlink control information, such as by acquiring system information from the base station 105-c, performing a random access procedure with the base station 105-c, or performing a paging procedure with the base station 105-c.

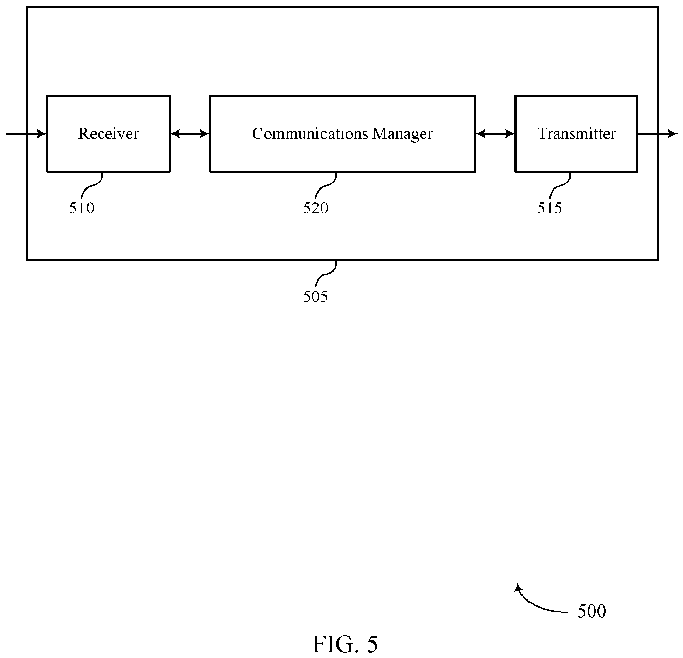

**FIG. 5** shows a block diagram 500 of a device 505 that supports downlink channel repetition for common search space sets in accordance with aspects of the present disclosure. The device 505 may be an example of aspects of a UE 115 as described herein. The device 505 may include a receiver 510, a transmitter 515, and a communications manager 520. The device 505 may also include one or more processors, memory coupled with the one or more processors, and instructions stored in the memory that are executable by the one or more processors to enable the one or more processors to perform the downlink channel repetition features discussed herein. Each of these components may be in communication with one another (e.g., via one or more buses).

The receiver 510 may provide a means for receiving information such as packets, user data, control information, or any combination thereof associated with various information channels (e.g., control channels, data channels, information channels related to downlink channel repetition for common search space sets). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to downlink channel repetition for common search space sets). In some examples, the transmitter 515 may be co-located with a receiver 510 in a transceiver module. The transmitter 515 may utilize a single antenna or a set of multiple antennas.

The communications manager 520, the receiver 510, the transmitter 515, or various combinations thereof or various components thereof may be examples of means for performing various aspects of downlink channel repetition for common search space sets as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communications at a UE in accordance with examples as disclosed herein. For example, the communications manager 520 may be configured as or otherwise support a means for receiving an indication that a first common search space set and a second common search space set are linked for repetition of a downlink control channel that includes downlink control information associated with a random access procedure, scheduling of system information, or a paging procedure. The communications manager 520 may be configured as or otherwise support a means for monitoring the first common search space set and the second common search space set for the downlink control information based on the indication. The communications manager 520 may be configured as or otherwise support a means for decoding the downlink control information using at least one of a first physical downlink control channel candidate of the first common search space set or a second physical downlink control channel candidate of the second common search space set, where the first physical downlink control channel candidate is linked with the second physical downlink control channel candidate.

Additionally or alternatively, the communications manager 520 may support wireless communications at a UE in accordance with examples as disclosed herein. For example, the communications manager 520 may be configured as or otherwise support a means for receiving an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The communications manager 520 may be configured as or otherwise support a means for monitoring the first common search space set for the downlink control channel based on the first common search space set being configured in accordance with the confirmatory rule.

By including or configuring the communications manager 520 in accordance with examples as described herein, the device 505 (e.g., a processor controlling or otherwise coupled with the receiver 510, the transmitter 515, the communications manager 520, or a combination thereof) may support techniques for more efficient utilization of communication resources by configuring a UE to support control repetition, which may result in reduced processing overhead by increasing the probability that the UE receives the control information for communications.

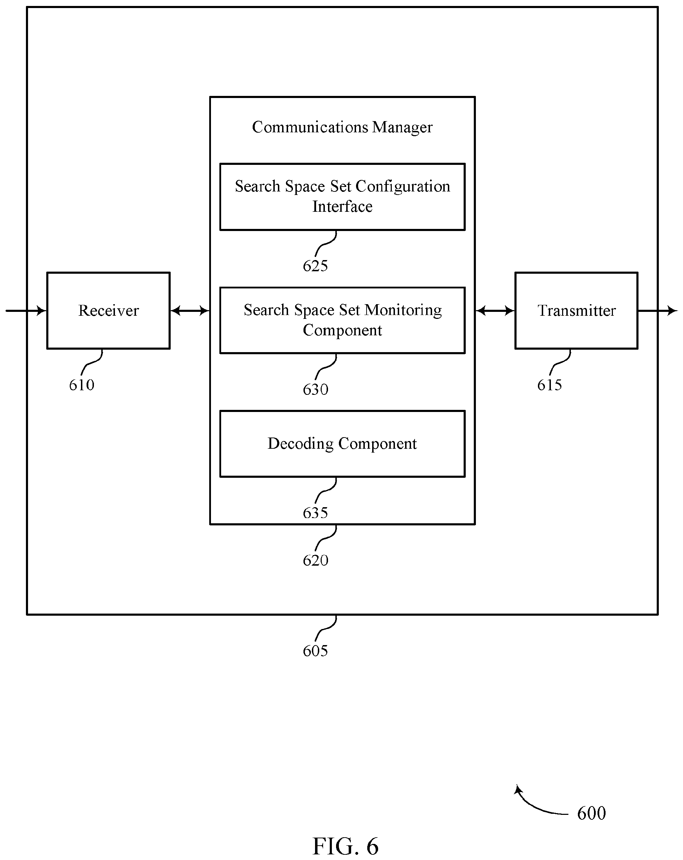

**FIG. 6** shows a block diagram 600 of a device 605 that supports downlink channel repetition for common search space sets in accordance with aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to downlink channel repetition for common search space sets). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to downlink channel repetition for common search space sets). In some examples, the transmitter 615 may be co-located with a receiver 610 in a transceiver module. The transmitter 615 may utilize a single antenna or a set of multiple antennas.

The device 605, or various components thereof, may be an example of means for performing various aspects of downlink channel repetition for common search space sets as described herein. For example, the communications manager 620 may include a search space set configuration interface 625, a search space set monitoring component 630, a decoding component 635, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a UE in accordance with examples as disclosed herein. The search space set configuration interface 625 may be configured as or otherwise support a means for receiving an indication that a first common search space set and a second common search space set are linked for repetition of a downlink control channel that includes downlink control information associated with a random access procedure, scheduling of system information, or a paging procedure. The search space set monitoring component 630 may be configured as or otherwise support a means for monitoring the first common search space set and the second common search space set for the downlink control information based on the indication. The decoding component 635 may be configured as or otherwise support a means for decoding the downlink control information using at least one of a first physical downlink control channel candidate of the first common search space set or a second physical downlink control channel candidate of the second common search space set, where the first physical downlink control channel candidate is linked with the second physical downlink control channel candidate.

Additionally or alternatively, the communications manager 620 may support wireless communications at a UE in accordance with examples as disclosed herein. The search space set configuration interface 625 may be configured as or otherwise support a means for receiving an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The search space set monitoring component 630 may be configured as or otherwise support a means for monitoring the first common search space set for the downlink control channel based on the first common search space set being configured in accordance with the confirmatory rule.

In some cases, the search space set configuration interface 625, the search space set monitoring component 630, and the decoding component 635 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the search space set configuration interface 625, the search space set monitoring component 630, and the decoding component 635 discussed herein. A transceiver processor may be collocated with and/or communicate with (e.g., direct the operations of) a transceiver of the device. A radio processor may be collocated with and/or communicate with (e.g., direct the operations of) a radio (e.g., an NR radio, an LTE radio, a Wi-Fi radio) of the device. A transmitter processor may be collocated with and/or communicate with (e.g., direct the operations of) a transmitter of the device. A receiver processor may be collocated with and/or communicate with (e.g., direct the operations of) a receiver of the device.

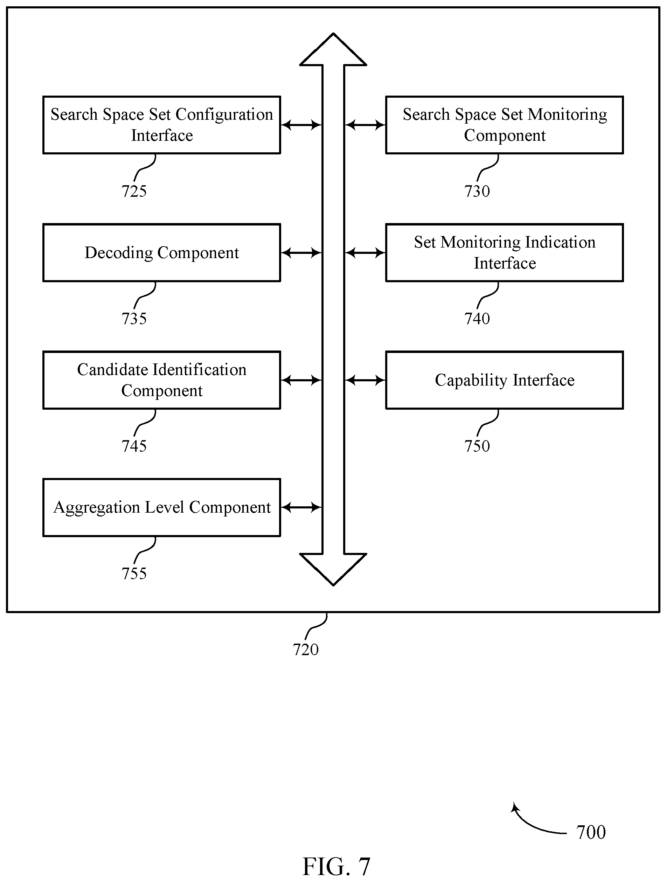

**FIG. 7** shows a block diagram 700 of a communications manager 720 that supports downlink channel repetition for common search space sets in accordance with aspects of the present disclosure. The communications manager 720 may be an example of aspects of a communications manager 520, a communications manager 620, or both, as described herein. The communications manager 720, or various components thereof, may be an example of means for performing various aspects of downlink channel repetition for common search space sets as described herein. For example, the communications manager 720 may include a search space set configuration interface 725, a search space set monitoring component 730, a decoding component 735, a set monitoring indication interface 740, a candidate identification component 745, a capability interface 750, an aggregation level component 755, or any combination thereof. Each of these components may communicate, directly or indirectly, with one another (e.g., via one or more buses).

The communications manager 720 may support wireless communications at a UE in accordance with examples as disclosed herein. The search space set configuration interface 725 may be configured as or otherwise support a means for receiving an indication that a first common search space set and a second common search space set are linked for repetition of a downlink control channel that includes downlink control information associated with a random access procedure, scheduling of system information, or a paging procedure. The search space set monitoring component 730 may be configured as or otherwise support a means for monitoring the first common search space set and the second common search space set for the downlink control information based on the indication. The decoding component 735 may be configured as or otherwise support a means for decoding the downlink control information using at least one of a first physical downlink control channel candidate of the first common search space set or a second physical downlink control channel candidate of the second common search space set, where the first physical downlink control channel candidate is linked with the second physical downlink control channel candidate.

In some examples, to support receiving the indication, the search space set configuration interface 725 may be configured as or otherwise support a means for receiving a first control message that includes a configuration that links, for repetition, the first common search space set with the second common search space set. In some examples, to support receiving the indication, the set monitoring indication interface 740 may be configured as or otherwise support a means for receiving a second control message that indicates that the first common search space set is to be monitored for the downlink control channel based on the downlink control information being associated with one of the random access procedure, the scheduling of system information, or the paging procedure.

In some examples, to support receiving the indication, the set monitoring indication interface 740 may be configured as or otherwise support a means for receiving a control message that indicates that both the first common search space set and the second common search space set are linked and are to be monitored for the downlink control channel based on the downlink control information being associated with one of the random access procedure, the scheduling of system information, or the paging procedure.

In some examples, to support receiving the control message, the set monitoring indication interface 740 may be configured as or otherwise support a means for receiving a common physical downlink control channel configuration message that indicates that both a first index associated with the first common search space set and a second index associated with the second common search space set correspond to a same common search space set type.

In some examples, the candidate identification component 745 may be configured as or otherwise support a means for determining a number of downlink control channel candidates for the first common search space set and the second common search space set for a control channel element aggregation level of a set of control channel element aggregation levels, where the UE monitors the first common search space set and the second common search space set based on the determined number of downlink control channel candidates.

In some examples, to support determining the number of downlink control channel candidates for the control channel element aggregation level, the aggregation level component 755 may be configured as or otherwise support a means for identifying a mapping between the control channel element aggregation level and the number of downlink control channel candidates for the control channel element aggregation level. In some examples, to support determining the number of downlink control channel candidates for the control channel element aggregation level, the candidate identification component 745 may be configured as or otherwise support a means for assigning the number of downlink control channel candidates to both the first common search space set and the second common search space set.

In some examples, to support determining the number of downlink control channel candidates for the control channel element aggregation level, the aggregation level component 755 may be configured as or otherwise support a means for identifying a mapping between the control channel element aggregation level and the number of downlink control channel candidates for the control channel element aggregation level. In some examples, to support determining the number of downlink control channel candidates for the control channel element aggregation level, the candidate identification component 745 may be configured as or otherwise support a means for assigning a half of the number of downlink control channel candidates to both the first common search space set and the second common search space set.

In some examples, to support determining the number of downlink control channel candidates for the control channel element aggregation level, the aggregation level component 755 may be configured as or otherwise support a means for identifying a mapping between the control channel element aggregation level and the number of downlink control channel candidates for the control channel element aggregation level. In some examples, to support determining the number of downlink control channel candidates for the control channel element aggregation level, the candidate identification component 745 may be configured as or otherwise support a means for assigning the number of downlink control channel candidates to the first common search space set and the second common search space set based on whether the first common search space set and the second common search space set are positioned within a same transmission time interval.

In some examples, the UE assigns half of the number of downlink control channel candidates to both the first common search space set and the second common search space set when the first common search space set and the second common search space set are positioned within the same transmission time interval. In some examples, the UE assigns the number of downlink control channel candidates to both the first common search space set and the second common search space set when the first common search space set and the second common search space set are positioned within separate transmission time intervals.

In some examples, to support determining the number of downlink control channel candidates for the control channel element aggregation level, the candidate identification component 745 may be configured as or otherwise support a means for identifying a mapping between the control channel element aggregation level and the number of downlink control channel candidates for the control channel element aggregation level based on the first common search space set or the second common search space set having an index of zero.

In some examples, to support determining the number of downlink control channel candidates for the control channel element aggregation level, the candidate identification component 745 may be configured as or otherwise support a means for determining the number of downlink control channel candidates for the control channel element aggregation level based on a search space set configuration corresponding to both the first common search space set and the second common search space set.

In some examples, the candidate identification component 745 may be configured as or otherwise support a means for determining a total number of downlink control channel candidates by determining the number for each control channel element aggregation level of the set of control channel element aggregation levels.

In some examples, the search space set configuration interface 725 may be configured as or otherwise support a means for receiving an indication that the first common search space set has an index of zero. In some examples, the search space set configuration interface 725 may be configured as or otherwise support a means for receiving an indication of a first configuration for the first common search space set in accordance with the first common search space set having the index of zero. In some examples, the search space set configuration interface 725 may be configured as or otherwise support a means for receiving in indication of a second configuration for the second common search space set that corresponds to the first configuration.

In some examples, the search space set configuration interface 725 may be configured as or otherwise support a means for receiving an indication that the first common search space set has an index of zero, where the first common search space set is associated with one or more first monitoring occasions. In some examples, the search space set monitoring component 730 may be configured as or otherwise support a means for monitoring one or more second monitoring occasions of the second common search space set that map to the one or more first monitoring occasions of the first common search space set based in accordance with the first common search space set having the index of zero.

In some examples, the search space set monitoring component 730 may be configured as or otherwise support a means for refraining from monitoring a second monitoring occasion of the second common search space set that does not map to any of the one or more first monitoring occasions of the first common search space set.

In some examples, the search space set monitoring component 730 may be configured as or otherwise support a means for determining that the one or more second monitoring occasions of the second common search space set map to the one or more first monitoring occasion of the first common search space set in accordance with the first common search space set and the second common search space set being positioned within the same slot or within consecutive slots, a first quantity of the one or more first monitoring occasions relative to a second quantity of the monitoring occasions of the second common search space set, or a combination thereof.

In some examples, the capability interface 750 may be configured as or otherwise support a means for transmitting an indication that the UE supports the repetition of the downlink control channel that includes downlink control information associated with the random access procedure, the scheduling of system information, the paging procedure, or a combination thereof.

In some examples, to support transmitting the indication, the capability interface 750 may be configured as or otherwise support a means for transmitting the indication of support per radio network temporary identifier type, transmitting the indication of support of linkage of search space sets with search space set zero, transmitting the indication of support of inter-slot linkage, transmitting the indication of support of intra-slot linkage, transmitting the indication of support for UE-specific search space set linkage, transmitting the indication of support for type 3 search space set linkage, or a combination thereof.

In some examples, to support transmitting the indication, the capability interface 750 may be configured as or otherwise support a means for transmitting a separate indication specifying support for each of type 0, type 0A, type 1, and type 2 downlink control channel common search space set linkage.

In some examples, the capability interface 750 may be configured as or otherwise support a means for receiving, based on transmitting the indication, a first control message that includes a configuration that links, for repetition, the first common search space set with the second common search space set.

In some examples, both the first common search space set and the second common search space set are type 0 common search space sets associated with a system information radio network temporary identifier, a type 0A common search space sets associated with the system information radio network temporary identifier, type 1 common search space sets associated a random access radio network temporary identifier, a MsgB radio network temporary identifier, or a temporary cell rando network temporary identifier, or a type 2 common search space sets associated with a paging radio network temporary identifier.

Additionally or alternatively, the communications manager 720 may support wireless communications at a UE in accordance with examples as disclosed herein. In some examples, the search space set configuration interface 725 may be configured as or otherwise support a means for receiving an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. In some examples, the search space set monitoring component 730 may be configured as or otherwise support a means for monitoring the first common search space set for the downlink control channel based on the first common search space set being configured in accordance with the confirmatory rule.

In some examples, the confirmatory rule is that the UE does not expect that a type 0, type 0a, type 1, or type 2 common search space set to be linked to another search space set.

In some examples, the confirmatory rule is that the UE does not expect that a common search space set having an index of zero is to be linked to another common search space set.

In some cases, the search space set configuration interface 725, the search space set monitoring component 730, the decoding component 735, the set monitoring indication interface 740, the candidate identification component 745, the capability interface 750, and the aggregation level component 755 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the search space set configuration interface 725, the search space set monitoring component 730, the decoding component 735, the set monitoring indication interface 740, the candidate identification component 745, the capability interface 750, and the aggregation level component 755 discussed herein.

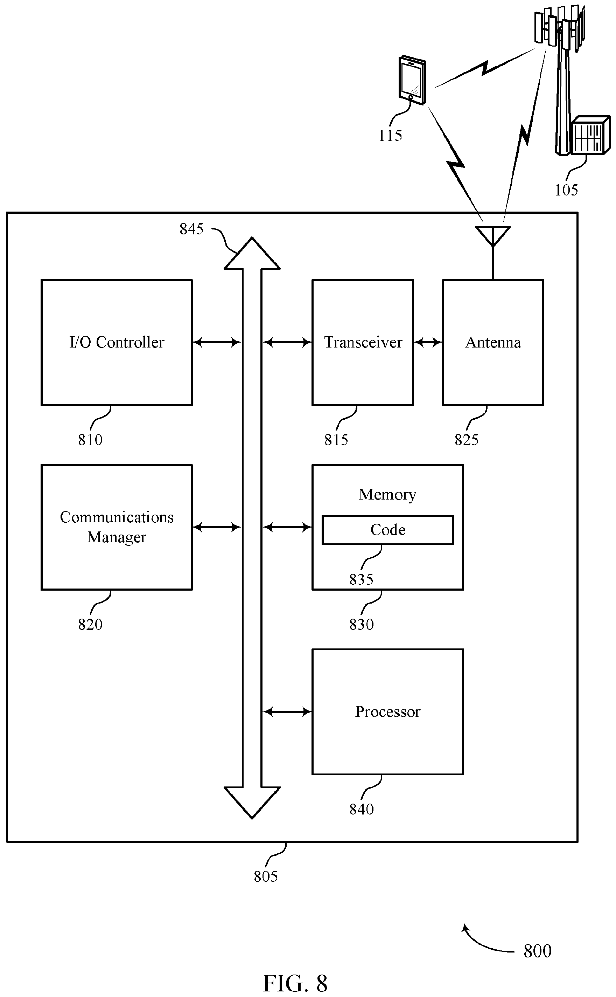

**FIG. 8** shows a diagram of a system 800 including a device 805 that supports downlink channel repetition for common search space sets in accordance with aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may be capable of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting downlink channel repetition for common search space sets). For example, the device 805 or a component of the device 805 may include a processor 840 and memory 830 coupled with the processor 840, the processor 840 and memory 830 configured to perform various functions described herein.

The communications manager 820 may support wireless communications at a UE in accordance with examples as disclosed herein. For example, the communications manager 820 may be configured as or otherwise support a means for receiving an indication that a first common search space set and a second common search space set are linked for repetition of a downlink control channel that includes downlink control information associated with a random access procedure, scheduling of system information, or a paging procedure. The communications manager 820 may be configured as or otherwise support a means for monitoring the first common search space set and the second common search space set for the downlink control information based on the indication. The communications manager 820 may be configured as or otherwise support a means for decoding the downlink control information using at least one of a first physical downlink control channel candidate of the first common search space set or a second physical downlink control channel candidate of the second common search space set, where the first physical downlink control channel candidate is linked with the second physical downlink control channel candidate.

Additionally or alternatively, the communications manager 820 may support wireless communications at a UE in accordance with examples as disclosed herein. For example, the communications manager 820 may be configured as or otherwise support a means for receiving an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The communications manager 820 may be configured as or otherwise support a means for monitoring the first common search space set for the downlink control channel based on the first common search space set being configured in accordance with the confirmatory rule.

By including or configuring the communications manager 820 in accordance with examples as described herein, the device 805 may support techniques for improved communication reliability by configuring the UE for control channel repetition monitoring thereby increasing the probability that the UE receives and decodes control information to support wireless communications. Further, as the UE may apply a rule to determine whether search space sets are linked for repetition, the UE may be able to efficiently identify the location of and decode the control information to support subsequent wireless communications.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of downlink channel repetition for common search space sets as described herein, or the processor 840 and the memory 830 may be otherwise configured to perform or support such operations.

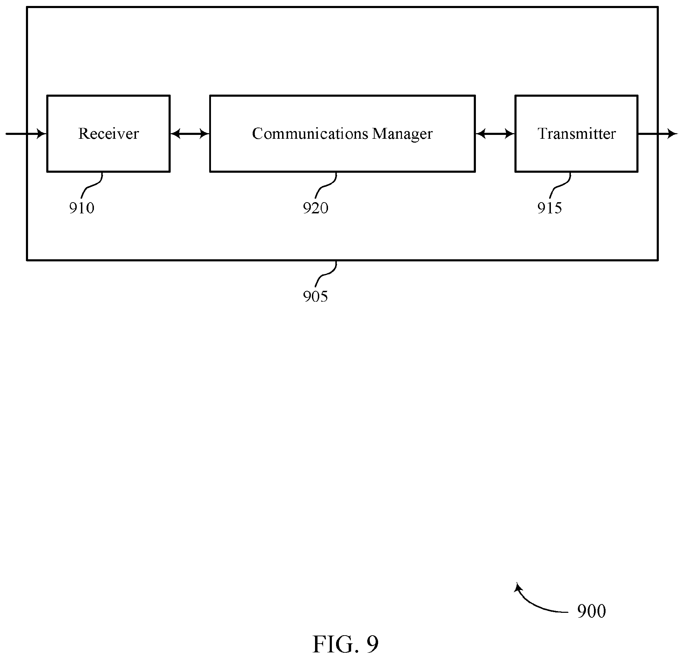

**FIG. 9** shows a block diagram 900 of a device 905 that supports downlink channel repetition for common search space sets in accordance with aspects of the present disclosure. The device 905 may be an example of aspects of a base station 105 as described herein. The device 905 may include a receiver 910, a transmitter 915, and a communications manager 920. The device 905 may also include one or more processors, memory coupled with the one or more processors, and instructions stored in the memory that are executable by the one or more processors to enable the one or more processors to perform the downlink channel repetition features discussed herein. Each of these components may be in communication with one another (e.g., via one or more buses).

The receiver 910 may provide a means for receiving information such as packets, user data, control information, or any combination thereof associated with various information channels (e.g., control channels, data channels, information channels related to downlink channel repetition for common search space sets). Information may be passed on to other components of the device 905. The receiver 910 may utilize a single antenna or a set of multiple antennas.

The transmitter 915 may provide a means for transmitting signals generated by other components of the device 905. For example, the transmitter 915 may transmit information such as packets, user data, control information, or any combination thereof associated with various information channels (e.g., control channels, data channels, information channels related to downlink channel repetition for common search space sets). In some examples, the transmitter 915 may be co-located with a receiver 910 in a transceiver module. The transmitter 915 may utilize a single antenna or a set of multiple antennas.

The communications manager 920, the receiver 910, the transmitter 915, or various combinations thereof or various components thereof may be examples of means for performing various aspects of downlink channel repetition for common search space sets as described herein. For example, the communications manager 920, the receiver 910, the transmitter 915, or various combinations or components thereof may support a method for performing one or more of the functions described herein.

In some examples, the communications manager 920, the receiver 910, the transmitter 915, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 920, the receiver 910, the transmitter 915, or various combinations or components thereof may be implemented in code (e.g., as communications management software or firmware) executed by a processor. If implemented in code executed by a processor, the functions of the communications manager 920, the receiver 910, the transmitter 915, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 920 may be configured to perform various operations (e.g., receiving, monitoring, transmitting) using or otherwise in cooperation with the receiver 910, the transmitter 915, or both. For example, the communications manager 920 may receive information from the receiver 910, send information to the transmitter 915, or be integrated in combination with the receiver 910, the transmitter 915, or both to receive information, transmit information, or perform various other operations as described herein.

The communications manager 920 may support wireless communications at a base station in accordance with examples as disclosed herein. For example, the communications manager 920 may be configured as or otherwise support a means for transmitting, to a UE an indication that a first common search space set and a second common search space set are linked for repetition of a downlink control channel that includes downlink control information associated with a random access procedure, scheduling of system information, or a paging procedure. The communications manager 920 may be configured as or otherwise support a means for encoding the downlink control information in a first downlink control channel candidate and a second downlink control channel candidate that is linked to the first downlink control channel candidate based on the indication. The communications manager 920 may be configured as or otherwise support a means for transmitting, to the UE, the encoded downlink control information in the first common search space set that includes the first downlink control channel candidate and in the second common search space set that includes the second downlink control channel candidate.

Additionally or alternatively, the communications manager 920 may support wireless communication at a base station in accordance with examples as disclosed herein. For example, the communications manager 920 may be configured as or otherwise support a means for transmitting, to a UE, an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The communications manager 920 may be configured as or otherwise support a means for encoding the first downlink control information in the first common search space set based on the first common search space set being configured in accordance with the confirmatory rule. The communications manager 920 may be configured as or otherwise support a means for transmitting the encoded first downlink control information.

By including or configuring the communications manager 920 in accordance with examples as described herein, the device 905 (e.g., a processor controlling or otherwise coupled with the receiver 910, the transmitter 915, the communications manager 920, or a combination thereof) may support techniques for more efficient utilization of communication resources by configuring a UE to support control repetition, which may result in reduced processing overhead by increasing the probability that the UE receives the control information for communications. Further, as the UE may apply a rule to determine whether search space sets are linked for repetition, the UE may be able to efficiently identify the location of and decode the control information to support subsequent wireless communications, thereby improving communication efficiency in a wireless communications system.

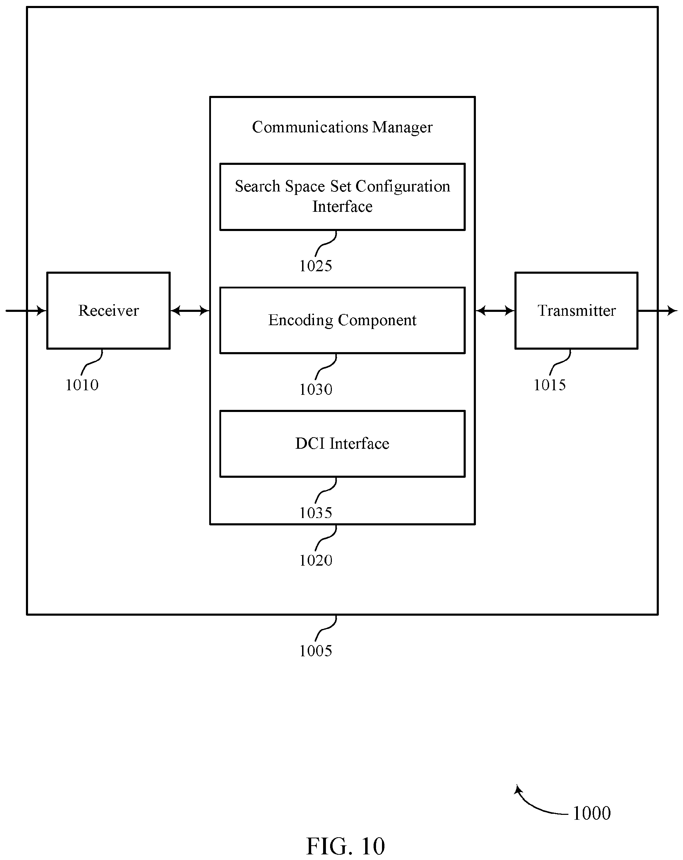

**FIG. 10** shows a block diagram 1000 of a device 1005 that supports downlink channel repetition for common search space sets in accordance with aspects of the present disclosure. The device 1005 may be an example of aspects of a device 905 or a base station 105 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to downlink channel repetition for common search space sets). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to downlink channel repetition for common search space sets). In some examples, the transmitter 1015 may be co-located with a receiver 1010 in a transceiver module. The transmitter 1015 may utilize a single antenna or a set of multiple antennas.

The device 1005, or various components thereof, may be an example of means for performing various aspects of downlink channel repetition for common search space sets as described herein. For example, the communications manager 1020 may include a search space set configuration interface 1025, an encoding component 1030, a DCI interface 1035, or any combination thereof. The communications manager 1020 may be an example of aspects of a communications manager 920 as described herein. In some examples, the communications manager 1020, or various components thereof, may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communications at a base station in accordance with examples as disclosed herein. The search space set configuration interface 1025 may be configured as or otherwise support a means for transmitting, to a UE an indication that a first common search space set and a second common search space set are linked for repetition of a downlink control channel that includes downlink control information associated with a random access procedure, scheduling of system information, or a paging procedure. The encoding component 1030 may be configured as or otherwise support a means for encoding the downlink control information in a first downlink control channel candidate and a second downlink control channel candidate that is linked to the first downlink control channel candidate based on the indication. The DCI interface 1035 may be configured as or otherwise support a means for transmitting, to the UE, the encoded downlink control information in the first common search space set that includes the first downlink control channel candidate and in the second common search space set that includes the second downlink control channel candidate.

Additionally or alternatively, the communications manager 1020 may support wireless communication at a base station in accordance with examples as disclosed herein. The search space set configuration interface 1025 may be configured as or otherwise support a means for transmitting, to a UE, an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The encoding component 1030 may be configured as or otherwise support a means for encoding the first downlink control information in the first common search space set based on the first common search space set being configured in accordance with the confirmatory rule. The DCI interface 1035 may be configured as or otherwise support a means for transmitting the encoded first downlink control information.

In some cases, the search space set configuration interface 1025, the encoding component 1030, and the DCI interface 1035 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the search space set configuration interface 1025, the encoding component 1030, and the DCI interface 1035 discussed herein. A transceiver processor may be collocated with and/or communicate with (e.g., direct the operations of) a transceiver of the device. A radio processor may be collocated with and/or communicate with (e.g., direct the operations of) a radio (e.g., an NR radio, an LTE radio, a Wi-Fi radio) of the device. A transmitter processor may be collocated with and/or communicate with (e.g., direct the operations of) a transmitter of the device. A receiver processor may be collocated with and/or communicate with (e.g., direct the operations of) a receiver of the device.

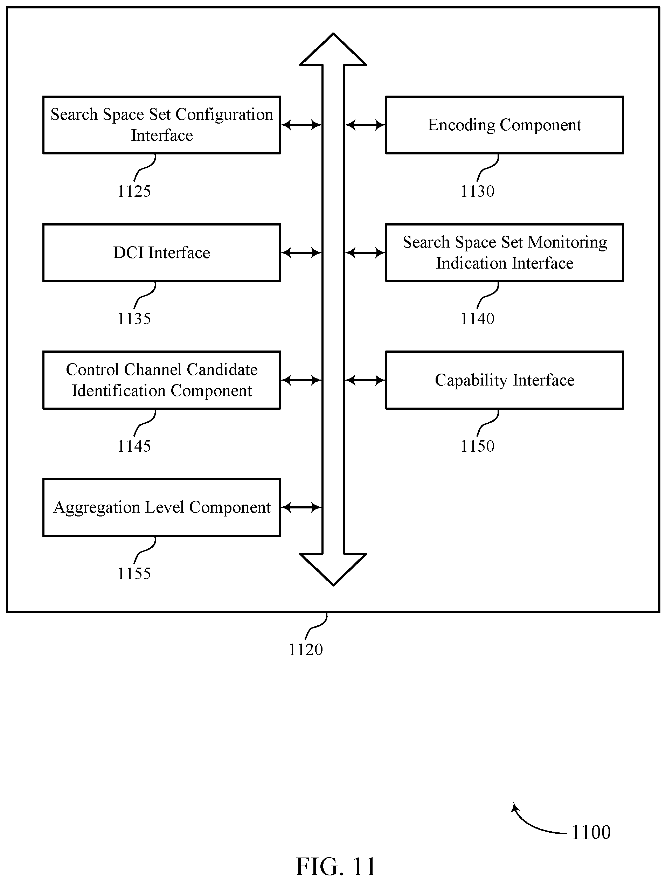

**FIG. 11** shows a block diagram 1100 of a communications manager 1120 that supports downlink channel repetition for common search space sets in accordance with aspects of the present disclosure. The communications manager 1120 may be an example of aspects of a communications manager 920, a communications manager 1020, or both, as described herein. The communications manager 1120, or various components thereof, may be an example of means for performing various aspects of downlink channel repetition for common search space sets as described herein. For example, the communications manager 1120 may include a search space set configuration interface 1125, an encoding component 1130, a DCI interface 1135, a search space set monitoring indication interface 1140, a control channel candidate identification component 1145, a capability interface 1150, an aggregation level component 1155, or any combination thereof. Each of these components may communicate, directly or indirectly, with one another (e.g., via one or more buses).

The communications manager 1120 may support wireless communications at a base station in accordance with examples as disclosed herein. The search space set configuration interface 1125 may be configured as or otherwise support a means for transmitting, to a UE an indication that a first common search space set and a second common search space set are linked for repetition of a downlink control channel that includes downlink control information associated with a random access procedure, scheduling of system information, or a paging procedure. The encoding component 1130 may be configured as or otherwise support a means for encoding the downlink control information in a first downlink control channel candidate and a second downlink control channel candidate that is linked to the first downlink control channel candidate based on the indication. The DCI interface 1135 may be configured as or otherwise support a means for transmitting, to the UE, the encoded downlink control information in the first common search space set that includes the first downlink control channel candidate and in the second common search space set that includes the second downlink control channel candidate.

In some examples, to support transmitting the indication, the search space set configuration interface 1125 may be configured as or otherwise support a means for transmitting a first control message that includes a configuration that links, for repetition, the first common search space set with the second common search space set. In some examples, to support transmitting the indication, the search space set monitoring indication interface 1140 may be configured as or otherwise support a means for transmitting a second control message that indicates that the first common search space set is to be monitored for the downlink control channel based on the downlink control information being associated with one of the random access procedure, the scheduling of system information, or the paging procedure.

In some examples, to support transmitting the indication, the search space set monitoring indication interface 1140 may be configured as or otherwise support a means for transmitting a control message that indicates that both the first common search space set and the second common search space set are linked and are to be monitored for the downlink control channel based on the downlink control information being associated with one of the random access procedure, the scheduling of system information, or the paging procedure.

In some examples, to support transmitting the control message, the search space set monitoring indication interface 1140 may be configured as or otherwise support a means for transmitting a common physical downlink control channel configuration message that indicates that both a first index associated with the first common search space set and a second index associated with the second common search space set correspond to a same common search space set type.

In some examples, the control channel candidate identification component 1145 may be configured as or otherwise support a means for determining a number of downlink control channel candidates for the first common search space set and the second common search space set for a control channel element aggregation level of a set of control channel element aggregation levels, where the UE monitors the first common search space set and the second common search space set based on the determined number of downlink control channel candidates.

In some examples, to support determining the number of downlink control channel candidates for the control channel element aggregation level, the aggregation level component 1155 may be configured as or otherwise support a means for identifying a mapping between the control channel element aggregation level and the number of downlink control channel candidates for the control channel element aggregation level. In some examples, to support determining the number of downlink control channel candidates for the control channel element aggregation level, the control channel candidate identification component 1145 may be configured as or otherwise support a means for assigning the number of downlink control channel candidates to both the first common search space set and the second common search space set.

In some examples, to support determining the number of downlink control channel candidates for the control channel element aggregation level, the aggregation level component 1155 may be configured as or otherwise support a means for identifying a mapping between the control channel element aggregation level and the number of downlink control channel candidates for the control channel element aggregation level. In some examples, to support determining the number of downlink control channel candidates for the control channel element aggregation level, the control channel candidate identification component 1145 may be configured as or otherwise support a means for assigning a half of the number of downlink control channel candidates to both the first common search space set and the second common search space set.

In some examples, to support determining the number of downlink control channel candidates for the control channel element aggregation level, the aggregation level component 1155 may be configured as or otherwise support a means for identifying a mapping between the control channel element aggregation level and the number of downlink control channel candidates for the control channel element aggregation level. In some examples, to support determining the number of downlink control channel candidates for the control channel element aggregation level, the control channel candidate identification component 1145 may be configured as or otherwise support a means for assigning the number of downlink control channel candidates to the first common search space set and the second common search space set based on whether the first common search space set and the second common search space set are positioned within a same transmission time interval.

In some examples, the base station assigns a half of the number of downlink control channel candidates to both the first common search space set and the second common search space set when the first common search space set and the second common search space set are positioned within the same transmission time interval. In some examples, the base station assigns the number of downlink control channel candidates to both the first common search space set and the second common search space set when the first common search space set and the second common search space set are positioned within separate transmission time intervals.

In some examples, to support determining the number of downlink control channel candidates for the control channel element aggregation level, the aggregation level component 1155 may be configured as or otherwise support a means for identifying a mapping between the control channel element aggregation level and the number of downlink control channel candidates for the control channel element aggregation level based on the first common search space set or the second common search space set having an index of zero.

In some examples, to support determining the number of downlink control channel candidates for the control channel element aggregation level, the control channel candidate identification component 1145 may be configured as or otherwise support a means for determining the number of downlink control channel candidates for the control channel element aggregation level based on a search space set configuration corresponding to both the first common search space set and the second common search space set.

In some examples, the control channel candidate identification component 1145 may be configured as or otherwise support a means for determining a total number of downlink control channel candidates by determining the number for each control channel element aggregation level of the set of control channel element aggregation levels.

In some examples, the search space set configuration interface 1125 may be configured as or otherwise support a means for transmitting an indication that the first common search space set has an index of zero. In some examples, the search space set configuration interface 1125 may be configured as or otherwise support a means for transmitting an indication of a first configuration for the first common search space set in accordance with the first common search space set having the index of zero. In some examples, the search space set configuration interface 1125 may be configured as or otherwise support a means for transmitting an indication of a second configuration for the second common search space set that corresponds to the first configuration.

In some examples, the search space set configuration interface 1125 may be configured as or otherwise support a means for transmitting an indication that the first common search space set has an index of zero, where the first common search space set is associated with one or more first monitoring occasions, and where the second downlink control channel candidate is positioned within a second monitoring occasion of the second common search space set and the second monitoring occasion is mapped to a first monitoring occasion of the one or more first monitoring occasions.

In some examples, the encoding component 1130 may be configured as or otherwise support a means for refraining from encoding the downlink control information in a third downlink control channel candidate of a third monitoring occasion that is not mapped to one of the first monitoring occasions.

In some examples, the encoding component 1130 may be configured as or otherwise support a means for determining that one or more second monitoring occasions of the second common search space set map to the one or more first monitoring occasion of the first common search space set based in accordance with the first common search space set and the second common search space set being positioned within the same slot or within consecutive slots, a first quantity of the one or more first monitoring occasions relative to a second quantity of the monitoring occasions of the second common search space set, or a combination thereof.

In some examples, the capability interface 1150 may be configured as or otherwise support a means for receiving, from the UE, an indication that the UE supports the repetition of the downlink control channel that includes downlink control information associated with the random access procedure, the scheduling of system information, the paging procedure, or a combination thereof.

In some examples, to support receiving the indication, the capability interface 1150 may be configured as or otherwise support a means for receiving the indication of support per radio network temporary identifier type, receiving the indication of support of linkage of search space sets with search space set zero, receiving the indication of support of inter-slot linkage, receiving the indication of support of intra-slot linkage, receiving the indication of support for UE-specific search space set linkage, receiving the indication of support for type 3 search space set linkage, or a combination thereof.

In some examples, to support receiving the indication, the capability interface 1150 may be configured as or otherwise support a means for receiving the indication specifying support for each of type 1, type 0A, type 1, and type 2 downlink control channel common search space set linkage.

In some examples, to support receiving the indication, the capability interface 1150 may be configured as or otherwise support a means for transmitting, based on the received indication, a first control message that includes a configuration that links, for repetition, the first common search space set with the second common search space set.

In some examples, both the first common search space set and the second common search space set are type 0 common search space sets associated with a system information radio network temporary identifier, a type 0A common search space sets associated with the system information radio network temporary identifier, type 1 common search space sets associated with a random access radio network temporary identifier, a MsgB radio network temporary identifier, or a temporary cell rando network temporary identifier, or a type 2 common search space sets associated with a paging radio network temporary identifier.

Additionally or alternatively, the communications manager 1120 may support wireless communication at a base station in accordance with examples as disclosed herein. In some examples, the search space set configuration interface 1125 may be configured as or otherwise support a means for transmitting, to a UE, an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. In some examples, the encoding component 1130 may be configured as or otherwise support a means for encoding the first downlink control information in the first common search space set based on the first common search space set being configured in accordance with the confirmatory rule. In some examples, the DCI interface 1135 may be configured as or otherwise support a means for transmitting the encoded first downlink control information.

In some examples, the confirmatory rule is that a type 1, type 0a, type 1, or type 2 common search space set is not to be linked to another search space set.

In some examples, the confirmatory rule is that a common search space set having an index of zero is not to be linked to another common search space set.

In some cases, the search space set configuration interface 1125, the encoding component 1130, the DCI interface 1135, the search space set monitoring indication interface 1140, the control channel candidate identification component 1145, the capability interface 1150, and the aggregation level component 1155 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the search space set configuration interface 1125, the encoding component 1130, the DCI interface 1135, the search space set monitoring indication interface 1140, the control channel candidate identification component 1145, the capability interface 1150, and the aggregation level component 1155 discussed herein.

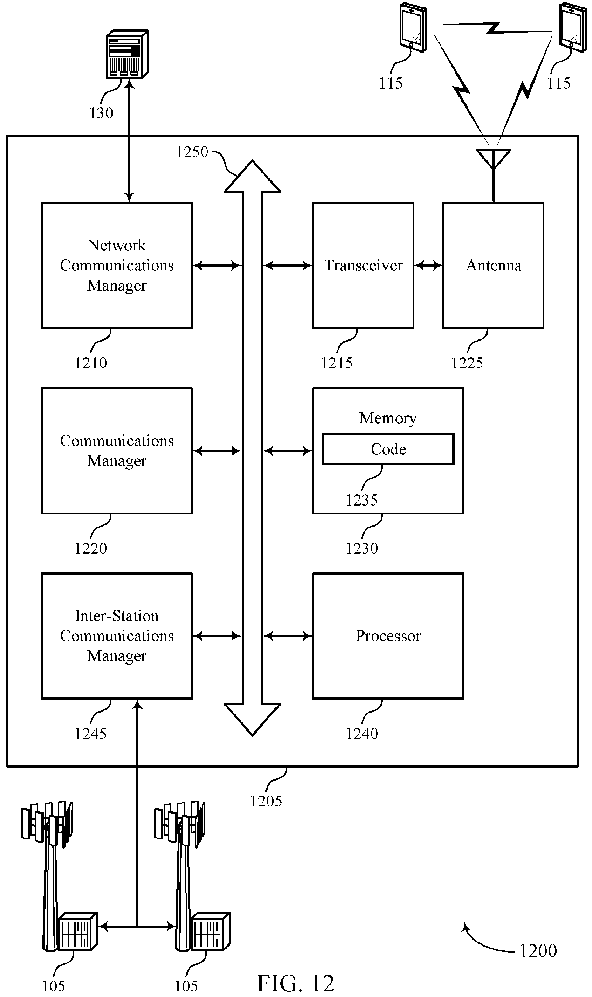

**FIG. 12** shows a diagram of a system 1200 including a device 1205 that supports downlink channel repetition for common search space sets in accordance with aspects of the present disclosure. The device 1205 may be an example of or include the components of a device 905, a device 1005, or a base station 105 as described herein. The device 1205 may communicate wirelessly with one or more base stations 105, UEs 115, or any combination thereof. The device 1205 may include components for bidirectional voice and data communications including components for transmitting and receiving communications, such as a communications manager 1220, a network communications manager 1210, a transceiver 1215, an antenna 1225, a memory 1230, code 1235, a processor 1240, and an inter-station communications manager 1245. These components may be in electronic communication or otherwise coupled (e.g., operatively, communicatively, functionally, electronically, electrically) via one or more buses (e.g., a bus 1250).

The network communications manager 1210 may manage communications with a core network 130 (e.g., via one or more wired backhaul links). For example, the network communications manager 1210 may manage the transfer of data communications for client devices, such as one or more UEs 115.

In some cases, the device 1205 may include a single antenna 1225. However, in some other cases the device 1205 may have more than one antenna 1225, which may be capable of concurrently transmitting or receiving multiple wireless transmissions. The transceiver 1215 may communicate bi-directionally, via the one or more antennas 1225, wired, or wireless links as described herein. For example, the transceiver 1215 may represent a wireless transceiver and may communicate bi-directionally with another wireless transceiver. The transceiver 1215 may also include a modem to modulate the packets, to provide the modulated packets to one or more antennas 1225 for transmission, and to demodulate packets received from the one or more antennas 1225. The transceiver 1215, or the transceiver 1215 and one or more antennas 1225, may be an example of a transmitter 915, a transmitter 1015, a receiver 910, a receiver 1010, or any combination thereof or component thereof, as described herein.

The memory 1230 may include RAM and ROM. The memory 1230 may store computer-readable, computer-executable code 1235 including instructions that, when executed by the processor 1240, cause the device 1205 to perform various functions described herein. The code 1235 may be stored in a non-transitory computer-readable medium such as system memory or another type of memory. In some cases, the code 1235 may not be directly executable by the processor 1240 but may cause a computer (e.g., when compiled and executed) to perform functions described herein. In some cases, the memory 1230 may contain, among other things, a BIOS which may control basic hardware or software operation such as the interaction with peripheral components or devices.

The processor 1240 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some other cases, a memory controller may be integrated into the processor 1240. The processor 1240 may be configured to execute computer-readable instructions stored in a memory (e.g., the memory 1230) to cause the device 1205 to perform various functions (e.g., functions or tasks supporting downlink channel repetition for common search space sets). For example, the device 1205 or a component of the device 1205 may include a processor 1240 and memory 1230 coupled with the processor 1240, the processor 1240 and memory 1230 configured to perform various functions described herein.

The inter-station communications manager 1245 may manage communications with other base stations 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communications network technology to provide communication between base stations 105.

The communications manager 1220 may support wireless communications at a base station in accordance with examples as disclosed herein. For example, the communications manager 1220 may be configured as or otherwise support a means for transmitting, to a UE an indication that a first common search space set and a second common search space set are linked for repetition of a downlink control channel that includes downlink control information associated with a random access procedure, scheduling of system information, or a paging procedure. The communications manager 1220 may be configured as or otherwise support a means for encoding the downlink control information in a first downlink control channel candidate and a second downlink control channel candidate that is linked to the first downlink control channel candidate based on the indication. The communications manager 1220 may be configured as or otherwise support a means for transmitting, to the UE, the encoded downlink control information in the first common search space set that includes the first downlink control channel candidate and in the second common search space set that includes the second downlink control channel candidate.

Additionally or alternatively, the communications manager 1220 may support wireless communication at a base station in accordance with examples as disclosed herein. For example, the communications manager 1220 may be configured as or otherwise support a means for transmitting, to a UE, an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The communications manager 1220 may be configured as or otherwise support a means for encoding the first downlink control information in the first common search space set based on the first common search space set being configured in accordance with the confirmatory rule. The communications manager 1220 may be configured as or otherwise support a means for transmitting the encoded first downlink control information.

By including or configuring the communications manager 1220 in accordance with examples as described herein, the device 1205 may support techniques for improved communication reliability by configuring the UE for control channel repetition monitoring thereby increasing the probability that the UE receives and decodes control information to support wireless communications.

In some examples, the communications manager 1220 may be configured to perform various operations (e.g., receiving, monitoring, transmitting) using or otherwise in cooperation with the transceiver 1215, the one or more antennas 1225, or any combination thereof. Although the communications manager 1220 is illustrated as a separate component, in some examples, one or more functions described with reference to the communications manager 1220 may be supported by or performed by the processor 1240, the memory 1230, the code 1235, or any combination thereof. For example, the code 1235 may include instructions executable by the processor 1240 to cause the device 1205 to perform various aspects of downlink channel repetition for common search space sets as described herein, or the processor 1240 and the memory 1230 may be otherwise configured to perform or support such operations.

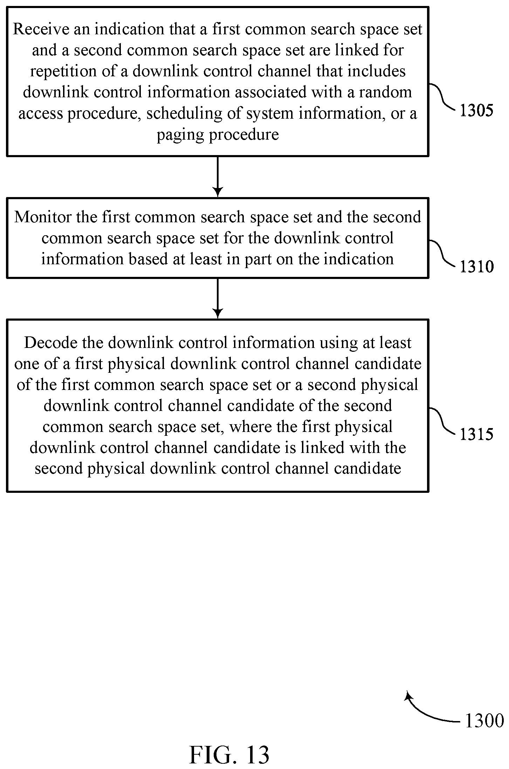

**FIG. 13** shows a flowchart illustrating a method 1300 that supports downlink channel repetition for common search space sets in accordance with aspects of the present disclosure. The operations of the method 1300 may be implemented by a UE or its components as described herein. For example, the operations of the method 1300 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1305, the method may include receiving an indication that a first common search space set and a second common search space set are linked for repetition of a downlink control channel that includes downlink control information associated with a random access procedure, scheduling of system information, or a paging procedure. The operations of 1305 may be performed in accordance with examples as disclosed herein. In some examples, aspects of the operations of 1305 may be performed by a search space set configuration interface 725 as described with reference to FIG. 7.

At 1310, the method may include monitoring the first common search space set and the second common search space set for the downlink control information based on the indication. The operations of 1310 may be performed in accordance with examples as disclosed herein. In some examples, aspects of the operations of 1310 may be performed by a search space set monitoring component 730 as described with reference to FIG. 7.

At 1315, the method may include decoding the downlink control information using at least one of a first physical downlink control channel candidate of the first common search space set or a second physical downlink control channel candidate of the second common search space set, where the first physical downlink control channel candidate is linked with the second physical downlink control channel candidate. The operations of 1315 may be performed in accordance with examples as disclosed herein. In some examples, aspects of the operations of 1315 may be performed by a decoding component 735 as described with reference to FIG. 7.

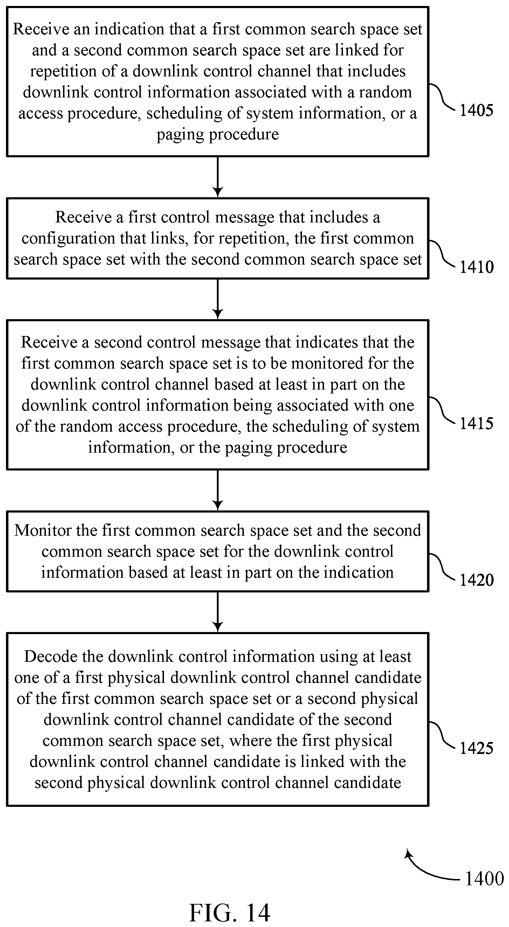

**FIG. 14** shows a flowchart illustrating a method 1400 that supports downlink channel repetition for common search space sets in accordance with aspects of the present disclosure. The operations of the method 1400 may be implemented by a UE or its components as described herein. For example, the operations of the method 1400 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1405, the method may include receiving an indication that a first common search space set and a second common search space set are linked for repetition of a downlink control channel that includes downlink control information associated with a random access procedure, scheduling of system information, or a paging procedure. The operations of 1405 may be performed in accordance with examples as disclosed herein. In some examples, aspects of the operations of 1405 may be performed by a search space set configuration interface 725 as described with reference to FIG. 7.

At 1410, the method may include receiving a first control message that includes a configuration that links, for repetition, the first common search space set with the second common search space set. The operations of 1410 may be performed in accordance with examples as disclosed herein. In some examples, aspects of the operations of 1410 may be performed by a search space set configuration interface 725 as described with reference to FIG. 7.

At 1415, the method may include receiving a second control message that indicates that the first common search space set is to be monitored for the downlink control channel based on the downlink control information being associated with one of the random access procedure, the scheduling of system information, or the paging procedure. The operations of 1415 may be performed in accordance with examples as disclosed herein. In some examples, aspects of the operations of 1415 may be performed by a set monitoring indication interface 740 as described with reference to FIG. 7.

At 1420, the method may include monitoring the first common search space set and the second common search space set for the downlink control information based on the indication. The operations of 1420 may be performed in accordance with examples as disclosed herein. In some examples, aspects of the operations of 1420 may be performed by a search space set monitoring component 730 as described with reference to FIG. 7.

At 1425, the method may include decoding the downlink control information using at least one of a first physical downlink control channel candidate of the first common search space set or a second physical downlink control channel candidate of the second common search space set, where the first physical downlink control channel candidate is linked with the second physical downlink control channel candidate. The operations of 1425 may be performed in accordance with examples as disclosed herein. In some examples, aspects of the operations of 1425 may be performed by a decoding component 735 as described with reference to FIG. 7.

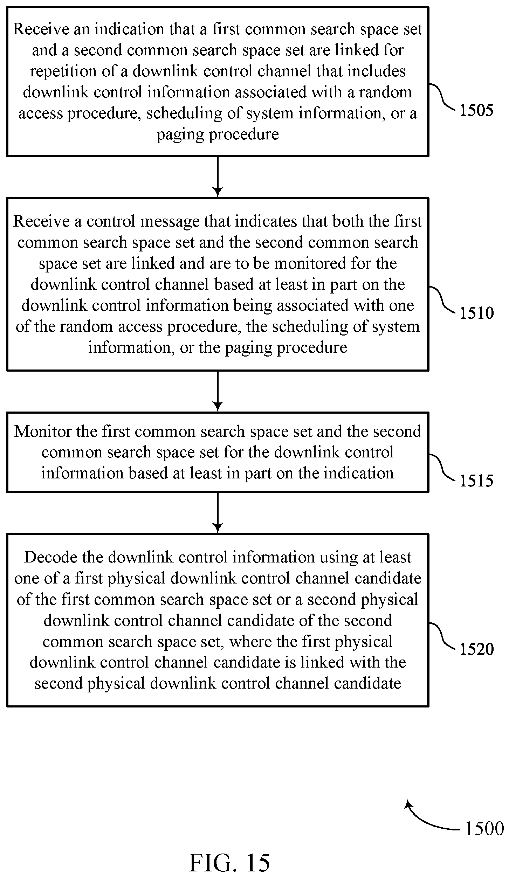

**FIG. 15** shows a flowchart illustrating a method 1500 that supports downlink channel repetition for common search space sets in accordance with aspects of the present disclosure. The operations of the method 1500 may be implemented by a UE or its components as described herein. For example, the operations of the method 1500 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1505, the method may include receiving an indication that a first common search space set and a second common search space set are linked for repetition of a downlink control channel that includes downlink control information associated with a random access procedure, scheduling of system information, or a paging procedure. The operations of 1505 may be performed in accordance with examples as disclosed herein. In some examples, aspects of the operations of 1505 may be performed by a search space set configuration interface 725 as described with reference to FIG. 7.

At 1510, the method may include receiving a control message that indicates that both the first common search space set and the second common search space set are linked and are to be monitored for the downlink control channel based on the downlink control information being associated with one of the random access procedure, the scheduling of system information, or the paging procedure. The operations of 1510 may be performed in accordance with examples as disclosed herein. In some examples, aspects of the operations of 1510 may be performed by a set monitoring indication interface 740 as described with reference to FIG. 7.

At 1515, the method may include monitoring the first common search space set and the second common search space set for the downlink control information based on the indication. The operations of 1515 may be performed in accordance with examples as disclosed herein. In some examples, aspects of the operations of 1515 may be performed by a search space set monitoring component 730 as described with reference to FIG. 7.

At 1520, the method may include decoding the downlink control information using at least one of a first physical downlink control channel candidate of the first common search space set or a second physical downlink control channel candidate of the second common search space set, where the first physical downlink control channel candidate is linked with the second physical downlink control channel candidate. The operations of 1520 may be performed in accordance with examples as disclosed herein. In some examples, aspects of the operations of 1520 may be performed by a decoding component 735 as described with reference to FIG. 7.

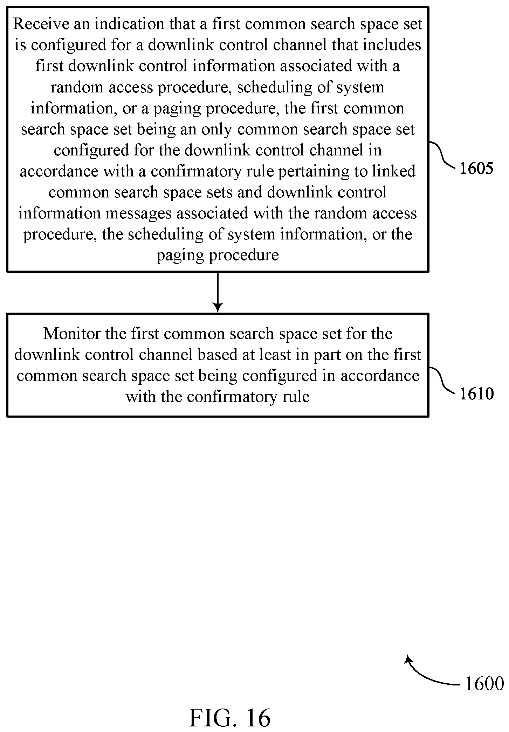

**FIG. 16** shows a flowchart illustrating a method 1600 that supports downlink channel repetition for common search space sets in accordance with aspects of the present disclosure. The operations of the method 1600 may be implemented by a UE or its components as described herein. For example, the operations of the method 1600 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1605, the method may include receiving an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The operations of 1605 may be performed in accordance with examples as disclosed herein. In some examples, aspects of the operations of 1605 may be performed by a search space set configuration interface 725 as described with reference to FIG. 7.

At 1610, the method may include monitoring the first common search space set for the downlink control channel based on the first common search space set being configured in accordance with the confirmatory rule. The operations of 1610 may be performed in accordance with examples as disclosed herein. In some examples, aspects of the operations of 1610 may be performed by a search space set monitoring component 730 as described with reference to FIG. 7.

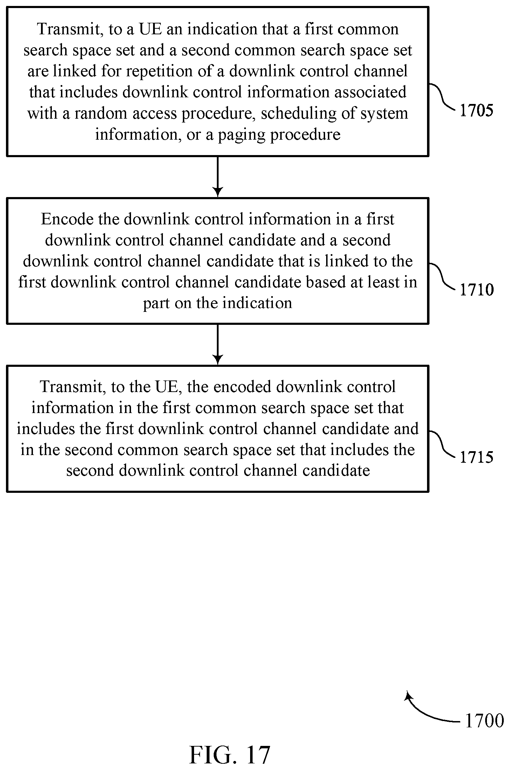

**FIG. 17** shows a flowchart illustrating a method 1700 that supports downlink channel repetition for common search space sets in accordance with aspects of the present disclosure. The operations of the method 1700 may be implemented by a base station or its components as described herein. For example, the operations of the method 1700 may be performed by a base station 105 as described with reference to FIGs. 1 through 4 and 9 through 12. In some examples, a base station may execute a set of instructions to control the functional elements of the base station to perform the described functions. Additionally or alternatively, the base station may perform aspects of the described functions using special-purpose hardware.

At 1705, the method may include transmitting, to a UE an indication that a first common search space set and a second common search space set are linked for repetition of a downlink control channel that includes downlink control information associated with a random access procedure, scheduling of system information, or a paging procedure. The operations of 1705 may be performed in accordance with examples as disclosed herein. In some examples, aspects of the operations of 1705 may be performed by a search space set configuration interface 1125 as described with reference to FIG. 11.

At 1710, the method may include encoding the downlink control information in a first downlink control channel candidate and a second downlink control channel candidate that is linked to the first downlink control channel candidate based on the indication. The operations of 1710 may be performed in accordance with examples as disclosed herein. In some examples, aspects of the operations of 1710 may be performed by an encoding component 1130 as described with reference to FIG. 11.

At 1715, the method may include transmitting, to the UE, the encoded downlink control information in the first common search space set that includes the first downlink control channel candidate and in the second common search space set that includes the second downlink control channel candidate. The operations of 1715 may be performed in accordance with examples as disclosed herein. In some examples, aspects of the operations of 1715 may be performed by a DCI interface 1135 as described with reference to FIG. 11.

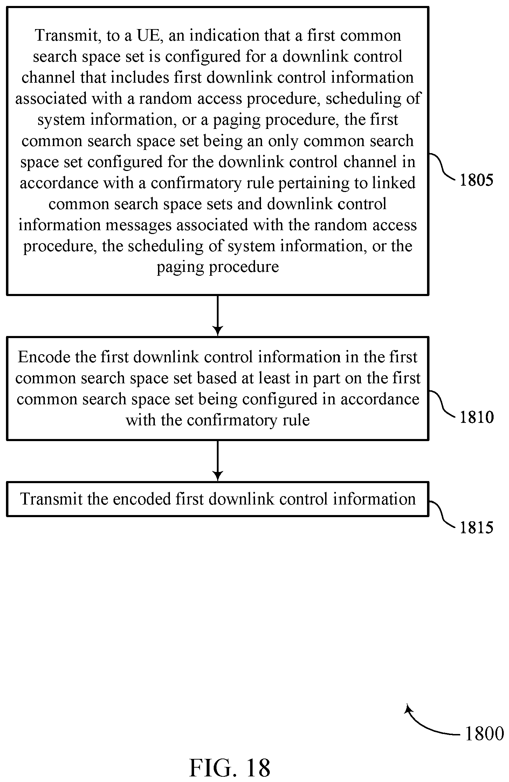

**FIG. 18** shows a flowchart illustrating a method 1800 that supports downlink channel repetition for common search space sets in accordance with aspects of the present disclosure. The operations of the method 1800 may be implemented by a base station or its components as described herein. For example, the operations of the method 1800 may be performed by a base station 105 as described with reference to FIGs. 1 through 4 and 9 through 12. In some examples, a base station may execute a set of instructions to control the functional elements of the base station to perform the described functions. Additionally or alternatively, the base station may perform aspects of the described functions using special-purpose hardware.

At 1805, the method may include transmitting, to a UE, an indication that a first common search space set is configured for a downlink control channel that includes first downlink control information associated with a random access procedure, scheduling of system information, or a paging procedure, the first common search space set being an only common search space set configured for the downlink control channel in accordance with a confirmatory rule pertaining to linked common search space sets and downlink control information messages associated with the random access procedure, the scheduling of system information, or the paging procedure. The operations of 1805 may be performed in accordance with examples as disclosed herein. In some examples, aspects of the operations of 1805 may be performed by a search space set configuration interface 1125 as described with reference to FIG. 11.

At 1810, the method may include encoding the first downlink control information in the first common search space set based on the first common search space set being configured in accordance with the confirmatory rule. The operations of 1810 may be performed in accordance with examples as disclosed herein. In some examples, aspects of the operations of 1810 may be performed by an encoding component 1130 as described with reference to FIG. 11.

At 1815, the method may include transmitting the encoded first downlink control information. The operations of 1815 may be performed in accordance with examples as disclosed herein. In some examples, aspects of the operations of 1815 may be performed by a DCI interface 1135 as described with reference to FIG. 11.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a Attorney Docket No. PX0244.WO (111334.1323) combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. An apparatus for wireless communications for use in a user equipment, UE (115), comprising:
a processor;
memory coupled with the processor; the memory storing instructions which when executed by the processor cause the apparatus to:
receive (1605) an indication that a first common search space set (240, 245, 340,345) is configured for a downlink control channel that includes first downlink control information for a random access procedure, scheduling of system information, or a paging procedure, the first common search space set (240, 245, 340,345) being an only common search space set configured for the downlink control channel in accordance with a confirmatory rule pertaining to common search space sets that are linked for repetition and downlink control information messages for the random access procedure, the scheduling of system information, or the paging procedure; and
monitor (1610) the first common search space set for the downlink control channel based at least in part on the first common search space set being configured in accordance with the confirmatory rule, wherein the confirmatory rule is that a common search space set having an index of zero is not to be linked to another common search space set.

2. The apparatus of claim 1, wherein the confirmatory rule is that the UE (115) does not expect that a type 0, type 0a, type 1, or type 2 physical downlink control channel, PDCCH, common search space set to be linked to another search space set.

3. An apparatus for wireless communication for use in a base station (105), comprising:
a processor;
memory coupled with the processor; the memory storing instructions which when executed by the processor cause the apparatus to:
transmit (1805), to a user equipment, UE (115), an indication that a first common search space set (240, 245, 340,345) is configured for a downlink control channel that includes first downlink control information for a random access procedure, scheduling of system information, or a paging procedure, the first common search space set being an only common search space set configured for the downlink control channel in accordance with a confirmatory rule pertaining to linked common search space sets and downlink control information messages for the random access procedure, the scheduling of system information, or the paging procedure wherein the confirmatory rule is that a common search space set having an index of zero is not to be linked to another common search space set;
encode (1810) the first downlink control information in the first common search space set based at least in part on the first common search space set being configured in accordance with the confirmatory rule; and
transmit (1815) the encoded first downlink control information.

4. The apparatus of claim 3, wherein the confirmatory rule is that a type 0, type 0a, type 1, or type 2 physical downlink control channel, PDCCH, common search space set is not to be linked to another search space set.

5. A method of wireless communication for use in a user equipment, UE (115), comprising:
receiving (1605) an indication that a first common search space set (240, 245, 340,345) is configured for a downlink control channel that includes first downlink control information for a random access procedure, scheduling of system information, or a paging procedure, the first common search space set being an only common search space set configured for the downlink control channel in accordance with a confirmatory rule pertaining to linked common search space sets and downlink control information messages for the random access procedure, the scheduling of system information, or the paging procedure; and
monitoring (1610) the first common search space set for the downlink control channel based at least in part on the first common search space set being configured in accordance with the confirmatory rule, wherein the confirmatory rule is that a common search space set having an index of zero is not to be linked to another common search space set.

6. A method of wireless communication for use in a base station (105), BS, comprising:
transmitting (1805), to a user equipment, UE (115), an indication that a first common search space set is configured for a downlink control channel that includes first downlink control information for a random access procedure, scheduling of system information, or a paging procedure, the first common search space set being an only common search space set configured for the downlink control channel in accordance with a confirmatory rule pertaining to common search space sets that are linked for repetition and downlink control information messages for the random access procedure, the scheduling of system information, or the paging procedure wherein the confirmatory rule is that a common search space set having an index of zero is not to be linked to another common search space set;
encoding (1810) the first downlink control information in the first common search space set based at least in part on the first common search space set being configured in accordance with the confirmatory rule; and
transmitting (1815) the encoded first downlink control information.

## Patentansprüche

1. Eine Vorrichtung für drahtlose Kommunikationen für die Verwendung in einem Benutzergerät (User Equipment bzw. UE) (115), aufweisend:
einen Prozessor,
einen Speicher, der mit dem Prozessor gekoppelt ist, wobei der Speicher Befehle speichert, die bei einer Ausführung durch den Prozessor die Vorrichtung veranlassen zum:
Empfangen (1605) einer Angabe, dass ein erster gemeinsamer Suchraumsatz (240, 245, 340, 345) konfiguriert ist für einen Downlink-Steuerkanal, der erste Downlink-Steuerinformationen für eine Direktzugriffsprozedur, eine Planung von Systeminformationen oder eine Paging-Prozedur enthält, wobei der erste gemeinsame Suchraumsatz (240, 245, 340, 345) ein einzelner gemeinsamer Suchraumsatz ist, der konfiguriert ist für den Downlink-Steuerkanal gemäß einer Bestätigungsregel in Bezug auf gemeinsame Suchraumsätze, die für eine Wiederholung verknüpft sind, und gemäß Downlink-Steuerinformationen-Nachrichten für die Direktzugriffsprozedur, die Planung von Systeminformationen oder die Paging-Prozedur, und
Überwachen (1610) des ersten gemeinsamen Suchraumsatzes auf den Downlink-Steuerkanal basierend wenigstens teilweise darauf, dass der erste gemeinsame Suchraumsatz gemäß der Bestätigungsregel konfiguriert ist, wobei die Bestätigungsregel besagt, dass ein gemeinsamer Suchraumsatz mit einem Index von null nicht mit einem anderen gemeinsamen Suchraumsatz verknüpft werden soll.

2. Vorrichtung nach Anspruch 1, wobei die Bestätigungsregel besagt, dass das UE (115) nicht erwartet, dass ein gemeinsamer Physikalischer-Downlink-Steuerkanal (PDCCH)-Suchraumsatz des Typs 0, des Typs 0a, des Typs 1 oder des Typs 2 mit einem anderen Suchraumsatz verknüpft werden soll.

3. Eine Vorrichtung für eine drahtlose Kommunikation für die Verwendung in einer Basisstation (105), aufweisend:
einen Prozessor,
einen Speicher, der mit dem Prozessor gekoppelt ist, wobei der Speicher Befehle speichert, die bei einer Ausführung durch den Prozessor die Vorrichtung veranlassen zum:
Senden (1805), an ein Benutzergerät (User Equipment bzw. UE) (115), einer Angabe, dass ein erster gemeinsamer Suchraumsatz (240, 245, 340, 345) konfiguriert ist für einen Downlink-Steuerkanal, der erste Downlink-Steuerinformationen für eine Direktzugriffsprozedur, eine Planung von Systeminformationen oder eine Paging-Prozedur enthält, wobei der erste gemeinsame Suchraumsatz ein einzelner gemeinsamer Suchraumsatz ist, der konfiguriert ist für den Downlink-Steuerkanal gemäß einer Bestätigungsregel in Bezug auf verknüpfte gemeinsame Suchraumsätze und gemäß Downlink-Steuerinformationen-Nachrichten für die Direktzugriffsprozedur, die Planung von Systeminformationen oder die Paging-Prozedur, wobei die Bestätigungsregel besagt, dass ein gemeinsamer Suchraumsatz mit einem Index von null nicht mit einem anderen gemeinsamen Suchraumsatz verknüpft werden soll,
Codieren (1810) der ersten Downlink-Steuerinformationen in dem ersten gemeinsamen Suchraumsatz basierend wenigstens teilweise darauf, dass der erste gemeinsame Suchraumsatz gemäß der Bestätigungsregel konfiguriert ist, und
Senden (1815) der codierten ersten Downlink-Steuerinformationen.

4. Vorrichtung nach Anspruch 3, wobei die Bestätigungsregel besagt, dass ein gemeinsamer Physikalischer-Downlink-Steuerkanal (PDCCH)-Suchraumsatz des Typs 0, des Typs 0a, des Typs 1 oder des Typs 2 nicht mit einem anderen Suchraumsatz verknüpft werden soll.

5. Ein Verfahren für eine drahtlose Kommunikation für die Verwendung in einem Benutzergerät (User Equipment bzw. UE) (115), aufweisend:
Empfangen (1605) einer Angabe, dass ein erster gemeinsamer Suchraumsatz (240, 245, 340, 345) konfiguriert ist für einen Downlink-Steuerkanal, der erste Downlink-Steuerinformationen für eine Direktzugriffsprozedur, eine Planung von Systeminformationen oder eine Paging-Prozedur enthält, wobei der erste gemeinsame Suchraumsatz ein einzelner gemeinsamer Suchraumsatz ist, der konfiguriert ist für den Downlink-Steuerkanal gemäß einer Bestätigungsregel in Bezug auf verknüpfte gemeinsame Suchraumsätze und gemäß Downlink-Steuerinformationen-Nachrichten für die Direktzugriffsprozedur, die Planung von Systeminformationen oder die Paging-Prozedur, und
Überwachen (1610) des ersten gemeinsamen Suchraumsatzes auf den Downlink-Steuerkanal basierend wenigstens teilweise darauf, dass der erste gemeinsame Suchraumsatz gemäß der Bestätigungsregel konfiguriert ist, wobei die Bestätigungsregel besagt, dass ein gemeinsamer Suchraumsatz mit einem Index von null nicht mit einem anderen gemeinsamen Suchraumsatz verknüpft werden soll.

6. Ein Verfahren für eine drahtlose Kommunikation für die Verwendung in einer Basisstation (BS) (105), aufweisend:
Senden (1805), an ein Benutzergerät (User Equipment bzw. UE) (115), einer Angabe, dass ein erster gemeinsamer Suchraumsatz konfiguriert ist für einen Downlink-Steuerkanal, der erste Downlink-Steuerinformationen für eine Direktzugriffsprozedur, eine Planung von Systeminformationen oder eine Paging-Prozedur enthält, wobei der erste gemeinsame Suchraumsatz ein einzelner gemeinsamer Suchraumsatz ist, der konfiguriert ist für den Downlink-Steuerkanal gemäß einer Bestätigungsregel in Bezug auf gemeinsame Suchraumsätze, die für eine Wiederholung verknüpft sind, und gemäß Downlink-Steuerinformationen-Nachrichten für die Direktzugriffsprozedur, die Planung von Systeminformationen oder die Paging-Prozedur, wobei die Bestätigungsregel besagt, dass ein gemeinsamer Suchraumsatz mit einem Index von null nicht mit einem anderen gemeinsamen Suchraumsatz verknüpft werden soll,
Codieren (1810) der ersten Downlink-Steuerinformationen in dem ersten gemeinsamen Suchraumsatz basierend wenigstens teilweise darauf, dass der erste gemeinsame Suchraumsatz gemäß der Bestätigungsregel konfiguriert ist, und
Senden (1815) der codierten ersten Downlink-Steuerinformationen.

## Revendications

1. Un dispositif de communication sans fil destiné à être utilisé dans un équipement utilisateur, UE (115), comprenant :
un processeur ;
une mémoire couplée au processeur ; la mémoire stockant des instructions qui, lorsqu'elles sont exécutées par le processeur, amènent le dispositif à :
recevoir (1605) une indication selon laquelle un premier ensemble d'espaces de recherche communs (240, 245, 340, 345) est configuré pour un canal de commande de liaison descendante qui comprend une première information de commande de liaison descendante pour une procédure d'accès aléatoire, une planification des informations système ou une procédure de radiomessagerie, ledit premier ensemble d'espaces de recherche communs (240, 245, 340, 345) étant le seul ensemble d'espaces de recherche communs configuré pour le canal de commande de liaison descendante conformément à une règle de confirmation relative à des ensembles d'espaces de recherche communs qui sont liés pour la répétition et des messages d'information de commande de liaison descendante pour la procédure d'accès aléatoire, la planification des informations système ou la procédure de radiomessagerie ; et
surveiller (1610) le premier ensemble d'espaces de recherche communs pour le canal de commande de liaison descendante sur la base, au moins en partie, du fait que le premier ensemble d'espaces de recherche communs est configuré conformément à la règle de confirmation, laquelle règle de confirmation est qu'un ensemble d'espaces de recherche communs ayant un indice de zéro ne doit pas être lié à un autre ensemble d'espaces de recherche communs.

2. Le dispositif selon la revendication 1, dans lequel la règle de confirmation est que l'UE (115) ne s'attend pas à ce qu'un ensemble d'espaces de recherche communs de canal physique de commande de liaison descendante, PDCCH, de type 0, type 0a, type 1 ou type 2 soit lié à un autre ensemble d'espaces de recherche.

3. Un dispositif de communication sans fil destiné à être utilisé dans une station de base (105), comprenant :
un processeur ;
une mémoire couplée au processeur ; la
mémoire stockant des instructions qui, lorsqu'elles sont exécutées par le processeur, amènent le dispositif à :
transmettre (1805), à un équipement utilisateur, UE (115), une indication selon laquelle un premier ensemble d'espaces de recherche communs (240, 245, 340, 345) est configuré pour un canal de commande de liaison descendante qui comprend une première information de commande de liaison descendante pour une procédure d'accès aléatoire, une planification des informations système ou une procédure de radiomessagerie, ledit premier ensemble d'espaces de recherche communs étant le seul
ensemble d'espaces de recherche communs configuré pour le canal de commande de liaison descendante conformément à une règle de confirmation relative à des ensembles d'espaces de recherche communs liés et à des messages d'information de commande de liaison descendante pour la procédure d'accès aléatoire, la planification des informations système ou la procédure de radiomessagerie, laquelle règle de confirmation est qu'un ensemble d'espaces de recherche communs ayant un indice de zéro ne doit pas être lié à un autre ensemble d'espaces de recherche communs ;
encoder (1810) la première information de commande de liaison descendante dans le premier ensemble d'espaces de recherche communs sur la base, au moins en partie, du fait que le premier ensemble d'espaces de recherche communs est configuré conformément à la règle de confirmation ; et
transmettre (1815) la première information de commande de liaison descendante encodée.

4. Le dispositif selon la revendication 3, dans lequel la règle de confirmation est qu'un ensemble d'espaces de recherche communs de canal physique de commande de liaison descendante, PDCCH, de type 0, type 0a, type 1 ou type 2 ne doit pas être lié à un autre ensemble d'espaces de recherche.

5. Un procédé de communication sans fil destiné à être utilisé dans un équipement utilisateur, UE (115), comprenant :
recevoir (1605) une indication selon laquelle un premier ensemble d'espaces de recherche communs (240, 245, 340, 345) est configuré pour un canal de commande de liaison descendante qui comprend une première information de commande de liaison descendante pour une procédure d'accès aléatoire, une planification des informations système ou une procédure de radiomessagerie, ledit premier ensemble d'espaces de recherche communs étant le seul ensemble d'espaces de recherche communs configuré pour le canal de commande de liaison descendante conformément à une règle de confirmation relative à des ensembles d'espaces de recherche communs liés et à des messages d'information de commande de liaison descendante pour la procédure d'accès aléatoire, la planification des informations système ou la procédure de radiomessagerie ; et
surveiller (1610) le premier ensemble d'espaces de recherche communs pour le canal de commande de liaison descendante sur la base, au moins en partie, du fait que le premier ensemble d'espaces de recherche communs est configuré conformément à la règle de confirmation, laquelle règle de confirmation est qu'un ensemble d'espaces de recherche communs ayant un indice de zéro ne doit pas être lié à un autre ensemble d'espaces de recherche communs.

6. Un procédé de communication sans fil destiné à être utilisé dans une station de base (105), BS, comprenant :
transmettre (1805), à un équipement utilisateur, UE (115), une indication selon laquelle un premier ensemble d'espaces de recherche communs est configuré pour un canal de commande de liaison descendante qui comprend une première information de commande de liaison descendante pour une procédure d'accès aléatoire, une planification des informations système ou une procédure de radiomessagerie, ledit premier ensemble d'espaces de recherche communs étant le seul ensemble d'espaces de recherche communs configuré pour le canal de commande de liaison descendante conformément à une règle de confirmation relative à des ensembles d'espaces de recherche communs qui sont liés pour la répétition et à des messages d'information de commande de liaison descendante pour la procédure d'accès aléatoire, la planification des informations système ou la procédure de radiomessagerie, laquelle règle de confirmation est qu'un ensemble d'espaces de recherche communs ayant un indice de zéro ne doit pas être lié à un autre ensemble d'espaces de recherche communs ;
encoder (1810) la première information de commande de liaison descendante dans le premier ensemble d'espaces de recherche communs sur la base, au moins en partie, du fait que le premier ensemble d'espaces de recherche communs est configuré conformément à la règle de confirmation ; et
transmettre (1815) la première information de commande de liaison descendante encodée.
